# EUROPEAN PATENT APPLICATION

(11) **EP 2 280 379 A2**
(43) Date of publication of application: **02.02.2011**
(21) Application number: 10075697.2
(22) Date of filing: 26.05.2006
(51) Int. Cl.: G06T 15/00, G06T 1/20, G06T 3/40, G06F 15/80, G06F 15/163

(54) **Frame synchronization in multiple video processing unit (VPU) systems**

(30) Priority: 27.05.2005 US 140114
(62) Divisional of application: 06779753.0
(71) Applicant: ATI Technologies Inc., Markham, Ontario L3T 7X6 (CA)
(72) Inventor: The designation of the inventor has not yet been filed
(74) Representative: Waldren, Robin Michael

(57) **Abstract**

A system comprising:
at least one driver configurable to build a set of commands and data that relate to performing a processing task; and
a plurality of processors coupled to receive the set of commands and data, and configurable to share the processing task, wherein the plurality of processors is further configurable to communicate with each other to synchronize the processing task using a communication mechanism determined from the set of commands and data.

## Description

### CROSS-REFERENCE

This application is related to the following United States patent applications:
*Antialiasing Method and System,* U.S. application number 11/140,156, invented by Arcot J. Preetham, Andrew S. Pomianowski, and Raja Koduri, filed concurrently herewith;
*Multiple Video Processing Unit (VPU) Memory Mapping,* U.S. application number 11/139,917, invented by Philip J. Rogers, Jeffrey Cheng, Dmitry Semiannokov, and Raja Koduri, filed concurrently herewith;
*Applying Non-Homogeneous Properties to Multiple Video Processing Units (VPUs),* U.S. application number 11/140,163, invented by Timothy M. Kelley, Jonathan L. Campbell, and David A. Gotwalt, filed concurrently herewith;
*Synchronizing Multiple Cards in Multiple Video Processing Unit (VPU) Systems,* U.S. application number 11/139,744, invented by Syed Athar Hussain, James Hunkins, and Jacques Vallieres, filed concurrently herewith;
*Compositing in Multiple Video Processing Unit (VPU) Systems,* U.S. application number 11/140,165, invented by James Hunkins and Raja Koduri, filed concurrently herewith;
*Dynamic Load Balancing in Multiple Video Processing Unit (VPU) Systems,* U.S. application number 11/139,893, invented by Jonathan L. Campbell and Maurice Ribble, filed concurrently herewith; and
*Computing Device with Flexibly Confgurable Expansion Slots, and Method of Operation,* U.S. application number 11/140,040, invented by Yaoqiang (George) Xie and Roumen Saltchev, filed May 27, 2005.

Each of the foregoing applications is incorporated herein by reference in its entirety.

### TECHNICAL FIELD

The invention is in the field of graphics and video processing.

### BACKGROUND

Graphics and video processing hardware and software continue to become more capable, as well as more accessible, each year. Graphics and video processing circuitry is typically present on an add-on card in a computer system, but is also found on the motherboard itself. The graphics processor is responsible for creating the picture displayed by the monitor. In early text-based personal computers (PCs) this was a relatively simple task. However, the complexity of modern graphics-capable operating systems has dramatically increased the amount of information to be displayed. In fact, it is now impractical for the graphics processing to be handled by the main processor, or central processing unit (CPU) of a system. As a result, the display activity has typically been handed off to increasingly intelligent graphics cards which include specialized coprocessors referred to as graphics processing units (GPUs) or video processing units (VPUs).

In theory, very high quality complex video can be produced by computer systems with known methods. However, as in most computer systems, quality, speed and complexity are limited by cost. For example, cost increases when memory requirements and computational complexity increase. Some systems are created with much higher than normal cost limits, such as display systems for military flight simulators. These systems are often entire one-of-a-kind computer systems produced in very low numbers. However, producing high quality, complex video at acceptable speeds can quickly become prohibitively expensive for even "high-end" consumer-level systems. It is therefore an ongoing challenge to create VPUs and VPU systems that are affordable for mass production, but have ever-improved overall quality and capability.

Another challenge is to create VPUs and VPU systems that can deliver affordable, higher quality video, do not require excessive memory, operate at expected speeds, and are seamlessly compatible with existing computer systems.

### SUMMARY OF THE INVENTION

According to a first aspect of the present invention, a system cmprises:
a system memory that is shared by components in the system via a bus;
multiple processors that share processing of a common task, each of the processors comprising at least one communication mechanism selected from a group comprising, a local memory, a semaphore mechanism, and a virtual memory mechanism for accessing the system memory via the bus; and
a driver coupled to each of the multiple processors for issuing a same command buffer to each of the processors concurrently for completing the common task, wherein completion of the common task includes at least one synchronization point, the command buffer comprising at least one synchronization mechanism for coordinating data transfers at the synchronization point, the at least one mechanism selected from a group comprising, the semaphore mechanism, the virtual memory mechanism, and accessing the system memory via the system bus.

According to a second aspect of the present invention, a system comprises:
at least one driver configurable to build a set of commands and data that relate to performing a processing task; and
a plurality of processors coupled to receive the set of commands and data, and configurable to share the processing task, wherein the plurality of processors is further configurable to communicate with each other to synchronize the processing task using a communication mechanism determined from the set of commands and data.

According to a third aspect of the present invention, a video processing apparatus is configured to:
receive a common set of commands that is interpreted concurrently by the apparatus and by other video processors; and
interpret synchronization commands in the common set of commands to access information stored external to the apparatus, wherein the information relates to actions to be taken by the apparatus to synchronize concurrent execution of the set of commands by the apparatus and the other video processor, wherein the synchronization commands comprise semaphore commands and memory access commands.

According to a fourth aspect of the present invention, there is provided a video processing card, comprising:
circuitry configured to build a set of commands for processing video data, including inserting synchronization commands at synchronization points for synchronizing a plurality of processors that perform the set of commands; and
circuitry configured to receive the common set and to interpret synchronization commands in the common set of commands to access information stored external to then card, wherein the information relates to actions to be taken by the circuitry to synchronize concurrent execution of the set of commands by the circuitry and other circuitry external to the card, wherein the synchronization commands comprise semaphore commands and memory access commands.

According to a fifth aspect of the present invention, a multi-processor method, comprises:
each of a plurality of processors receiving a set of commands, related to a task; and
the plurality of processors sharing performance of the task including synchronization of actions as required to perform the task without errors, wherein synchronization comprises inter-processor communication via a semaphore mechanism as directed by the set of commands.

According to a sixth aspect of the present invention, a video processing method, comprises:
receiving a set of commands comprising commands, data, wherein the commands include at least synchronization command; and
altering a normal flow of command execution in response to interpreting the at least one synchronization command, wherein the at least one synchronization command includes a semaphore command that is interpreted to cause a read of a semaphore register, and a memory command that is interpreted to cause a read of a memory location.

The methods of the present invention can advantageously be performed using computer software which can be stored on a computer readable medium.

### INCORPORATION BY REFERENCE

All publications and patent applications mentioned in this specification are herein incorporated by reference to the same extent as if each individual publication or patent application was specifically and individually indicated to be incorporated by reference.

### BRIEF DESCRIPTION OF THE DRAWINGS

**Figure 1** is a block diagram of a video processing system according to an embodiment.
**Figure 2** is a more detailed block diagram of a video processing system according to an embodiment.
**Figure 3** is a block diagram of elements of multiVPU system, including frame synchronization according to an embodiment.
**Figure 4** is a block diagram of elements of multiVPU system, including register-based frame synchronization according to an embodiment.
**Figure 5** is a block diagram of elements of multiVPU system, including memory-based frame synchronization according to an embodiment.
**Figure 6** is a block diagram of various components of a video processing system according to an embodiment.
**Figure 7** is a more detailed block diagram of a video processing system, which is a configuration similar to that of Figure 6 according to an embodiment.
**Figure 8** is a diagram of a one-card video processing system according to an embodiment.
**Figure 9** is a diagram of a one-card video processing system according to an embodiment.
**Figure 10** is a diagram of a two-card video processing system according to an embodiment.
**Figure 11** is a diagram of a two-card video processing system according to an embodiment.
**Figure 12** is a block diagram of an interlink module (1M) according to an embodiment.
**Figure 13** is a diagram illustrating various load balancing modes according to an embodiment.
**Figure 14** is a block diagram of path control logic of an interlink module (IM) according to an embodiment.
**Figure 15** is a block diagram of I2C paths according to a dongle embodiment.
**Figure 16** is a block diagram of I2C paths of an interlink module (IM) according to an embodiment.
Figure 17 is a block diagram of I2C paths on a VPU card according to an embodiment.

### DETAILED DESCRIPTION

An improved system and method for video processing is described herein. Embodiments include a video processing system with at least one graphics processing unit (GPU) or video processing unit (VPU). As used herein, GPU and VPU are interchangeable terms. In various embodiments, rendering tasks are shared among the VPUs in parallel to provide improved performance and capability with minimal increased cost. Respective VPUs in the system cooperate to produce a frame to be displayed. In various embodiment, data output by different VPUs in the system is combined, or merged, or composited to produce a frame to be displayed. In various embodiments, frame data processed by different VPUs in a system is synchronized to assure accurate operation even in systems that include VPUs that do not share a VPU card and do not have the benefit of conventional methods of inter-VPU communication or synchronization. In one embodiment, the system is programmable such that various modes of operation are selectable, including various compositing modes, and various modes of task sharing or load balancing between multiple VPUs.

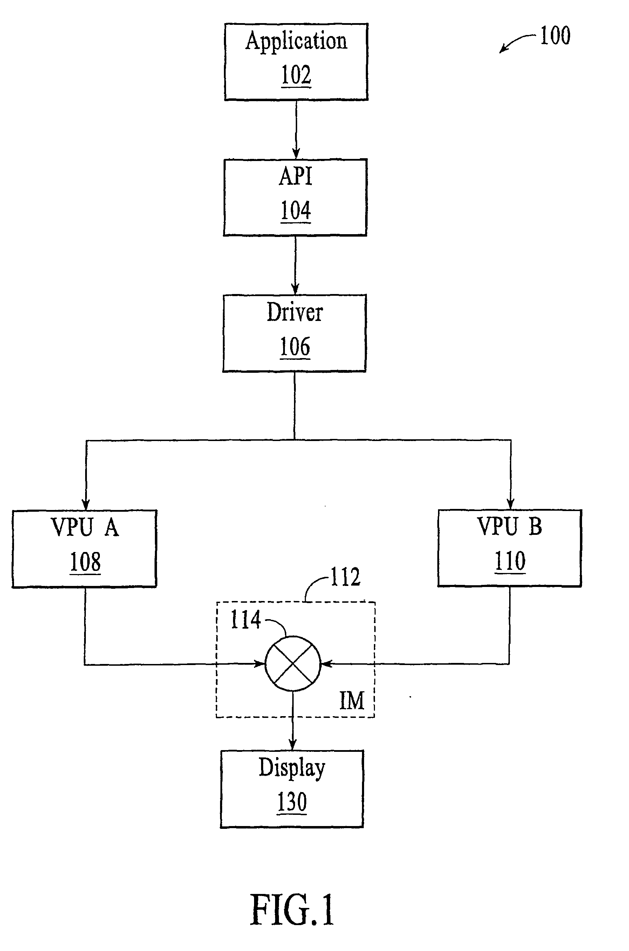

**Figure 1** is a block diagram of a video processing system 100 according to an embodiment. The system 100 includes an application 102. The application 102 is an end user application that requires video processing capability, such as a video game application. The application 102 communicates with application programming interface (API) 104. Several APIs are available for use in the video processing context. APIs were developed as intermediaries between the application software, such as the application 102, and video hardware on which the application runs. With new chipsets and even entirely new hardware technologies appearing at an increasing rate, it is difficult for applications developers to take into account, and take advantage of, the latest hardware features. It is also becoming impossible to write applications specifically for each foreseeable set of hardware. APIs prevent applications from having to be too hardware specific. The application can output graphics data and commands to the API in a standardized format, rather than directly to the hardware. Examples of available APIs include DirectX (from Microsoft) and OpenGL (from Silicon Graphics).

The API 104 can be any one of the available APIs for running video applications. The API 104 communicates with a driver 106. The driver 106 is typically written by the manufacturer of the video hardware, and translates the standard code received from the API into a native format understood by the hardware. The driver allows input from, for example, an application, process, or user to direct settings. Such settings include settings for selecting modes of operation, including modes of operation for each of multiple VPUs, and modes of compositing frame data from each of multiple VPUs, as described herein. For example, a user can select settings via a user interface (UI), including a UI supplied to the user with video processing hardware and software as described herein.

In one embodiment, the video hardware includes two video processing units, VPU A 108 and VPU B 110. In other embodiments there can be less than two or more than two VPUs. In various embodiments, VPU A 108 and VPU B 110 are identical. In various other embodiments, VPU A 108 and VPU B 110 are not identical. The various embodiments, which include different configurations of a video processing system, will be described in greater detail below.

The driver 106 issues commands to VPU A 108 and VPU B 110. The commands issued to VPU A 108 and VPU B 110 at the same time are for processing the same frame to be displayed. VPU A 108 and VPU B 110 each execute a series of commands for processing the frame. The driver 106 programmably instructs VPU A 108 and VPU B 110 to render frame data according to a variety of modes. For example, the driver 106 programmably instructs VPU A 108 and VPU B 110 to render a particular portion of the frame data. Alternatively, the driver 106 programmably instructs each of VPU A 108 and VPU B 110 to render the same portion of the frame data.

When either of VPU A 108 and VPU B 110 finishes executing the commands for the frame, the frame data is sent to a compositor 114. The compositor 114 is optionally included in an interlink module 112, as described more fully below. VPU A 108 and VPU B 110 cooperate to produce a frame to be displayed. In various embodiments, the frame data from each of VPU A 108 and VPU B 110 is combined, or merged, or composited in the compositor 114 to generate a frame to be rendered to a display 130. As used herein, the terms combine, merge, composite, mix, or interlink all refer to the same capabilities of the IM 112 and/or compositor 114 as described herein.

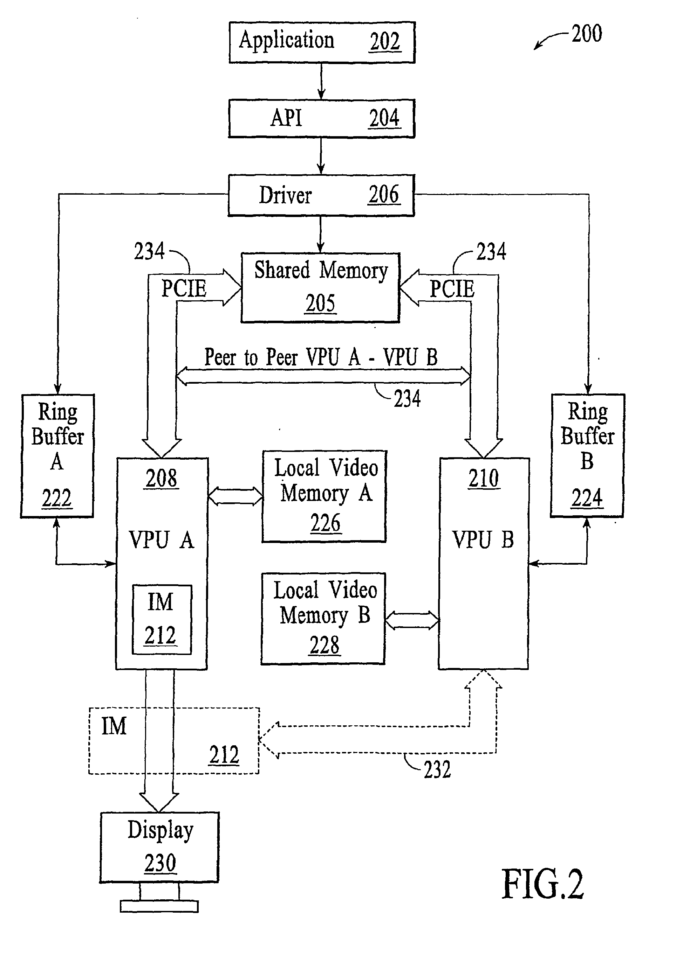

**Figure 2** is a block diagram of a system 200 according to an embodiment. The system 200 includes components or elements that may reside on various components of a video-capable computer system. In one embodiment an application 202, a driver 204, and a shared memory 205 reside on a host computer system, while remaining components reside on video-specific components, including one or more video cards, but the invention is not so limited. Any of the components shown could reside anywhere or, alternatively, various components could access other components remotely via a wired or wireless network. The application 202 is an end user application that requires video processing capability, such as a video game application. The application 202 communicates with application programming interface (API) 204. The API 204 can be any one of the available graphics, or video, or 3D APIs including DirectX (from Microsoft) and OpenGL (from Silicon Graphics).

The API 204 communicates with a driver 206. The driver 206 is written specifically for the system 200, and translates the standard code received from the API 204 into a native format understood by the VPU components, which will be explained more fully below.

In one embodiment, the system 200 further includes two VPUs, VPU A 208 and VPU B 210. The invention is not limited to two VPUs. Aspects of the invention as described herein would be workable with one VPU with modifications available to one of ordinary skill in the art. However, in most instances the system would be less efficient with one VPU than with more than one VPU. Various embodiments also include more than two VPUs. Systems with more than two are workable with modifications available to one of ordinary skill in the art, and in most instances would provide better effciency than a system with two VPUs. In various embodiments VPU A 208 and VPU B 210 can be on one or more video cards that each includes a video processor and other associated hardware. As will be explained further below, the invention is not so limited. For example, more than one VPU can be resident on one card or board. However, as referred to herein a VPU is intended to include at least a video processor.

VPU A 208 and VPU B 210 receive commands and data from the driver 206 through respective ring buffers A 222, and B 224. The commands instruct VPU A 208 and VPU B 210 to perform a variety of operations on the data in order to ultimately produce a rendered frame for a display 230.

The driver 206 has access to a shared memory 205. In one embodiment, the shared memory 205, or system memory 205, is memory on a computer system that is accessible to other components on the computer system bus, but the invention is not so limited.

In one embodiment, the shared memory 205, VPU A 208 and VPU B 210 all have access to a shared communication bus 234, and therefore to other components on the bus 234. In one embodiment, the shared communication bus 234 is a peripheral component interface express (PCIE) bus, but the invention is not so limited.

The PCIE bus is specifically described in the following documents, which are incorporated by reference herein in their entirety:
PCI Express™, Base Specification, Revision 1.1, March 28, 2005;
PCI Express™, Card Electromechanical Specification, Revision 1.1, March 28, 2005;
PCI Express™, Base Specification, Revision 1.a, April 15, 2003; and
PCI Express™, Card Electromechanical Specification, Revision 1.0a, April 15, 2003.

The Copyright for all of the foregoing documents is owned by PCI-SIG.

In one embodiment, VPU A 208 and VPU B 210 communicate directly with each other using a peer-to-peer protocol over the bus 234, but the invention is not so limited. In other embodiments, there may be a direct dedicated communication mechanism between VPU A 208 and VPU B 210.

VPU A 208 and VPU B 210 each have a local video memory 226 and 228, respectively, available. In various embodiments, one of the VPUs functions as a master VPU and the other VPU functions as a slave VPU, but the invention is not so limited. In other embodiments, the multiple VPUs could be peers under central control of another component. In one embodiment, VPU A 208 acts as a master VPU and VPU B 210 acts as a slave VPU.

In one such embodiment, various coordinating and combining functions are performed by an interlink module (IM) 212 that is resident on a same card as VPU A 208. This is shown as IM 212 enclosed with a solid line. In such an embodiment, VPU A 208 and VPU B 210 communicate with each other via the bus 234 for transferring inter-VPU communications (e.g., command and control) and data. For example, when VPU B 210 transfers an output frame to IM 212 on VPU A 208 for compositing (as shown in Figure 1 for example), the frame is transferred via the bus 234.

In various other embodiments, the IM 212 is not resident on a VPU card, but is an independent component with which both VPU A 208 and VPU B 210 communicate. One such embodiment includes the IM 212 in a "dongle" that is easily connected to VPU A 208 and VPU B 210. This is indicated in the figure by the IM 212 enclosed by the dashed line. In such an embodiment, VPU A 208 and VPU B 210 perform at least some communication through an IM connection 232. For example, VPU A 208 and VPU B 210 can communicate command and control information using the bus 234 and data, such as frame data, via the IM connection 232.

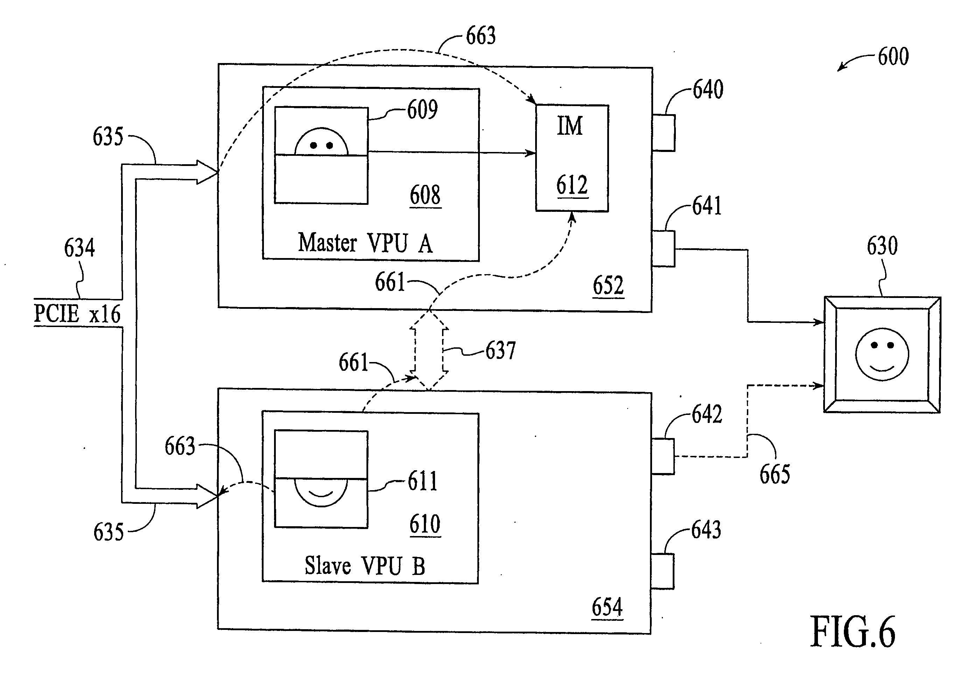

There are many configurations of the system 200 contemplated as different embodiments of the invention. Figures 6-11 as described below illustrate just some of these embodiments.

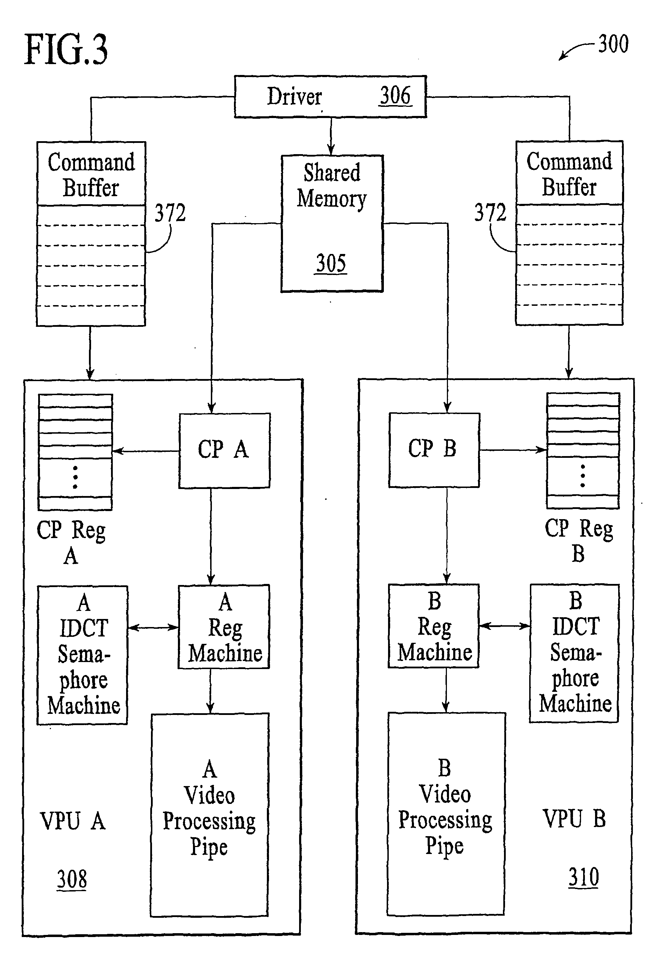

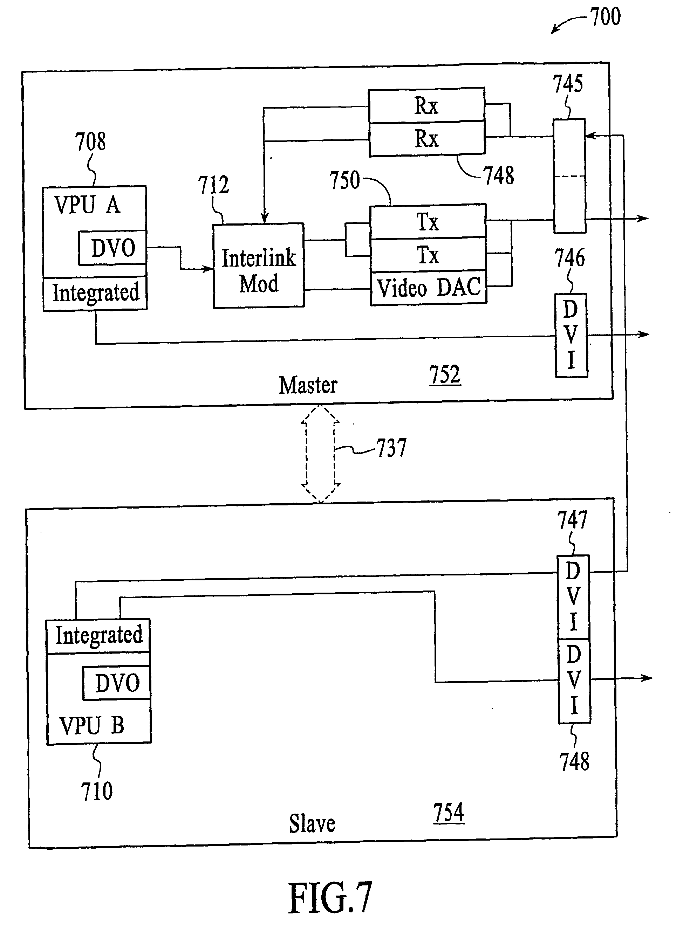

**Figure 3** is a block diagram of a two VPU card embodiment, showing various components of a VPU A 310 and a VPU B 310. Each of VPU A 308 and VPU B 310 are on different VPU cards (not shown) in a configuration similar to that shown in Figures 6 and 7, for example. Each of VPU A 308 and VPU B 310 have access to a system memory, or shared memory 305. Each of VPU A 308 and VPU B 310 receive a command buffer 372 that includes commands associated with rendering the same frame. Multiple command buffers may be required to render one complete frame to a display. Commands include render commands, commands to change state, and commands to load pixels, for example. The final command at the end of the frame buffer is a display command.

VPU A 308 and VPU B 310 each include respective command processors (CPs), CP A and CP B. CP A and CP B each have access to respective CP registers as shown. VPU A 308 and VPU B 310 each include respective register machines A and B, which control access to various registers. CP registers and any registers associated with the IDCT semaphore machine or register machine are typically physically located in a local memory (not shown) of the particular VPU. VPU A 308 and VPU B 310 each include respective IDCT semaphore machines A and B, which control use of IDCT semaphores. IDCT is a semaphore that is traditionally used for video 3D synchronization of two processing pipelines on one VPU. Also, VPU A 308 and VPU B 310 each include respective video processing pipelines A and B. CP A and CP B each communicate with the system memory 305.

Under certain circumstances, a mechanism is required to synchronize VPU A and VPU B. In various embodiments, mechanisms are included to ensure that the one of the VPUs (A or B) waits or stalls before passing a certain point of execution in the VPU input command buffer 372. The wait/stall condition is reset by the other VPU as soon as the other VPU reaches the same point of execution in the command buffer 372. Such synchronization is referred to herein as frame synchronization. One of the circumstances under which frame synchronization is used is VPU-to-VPU data transfers. In embodiment described herein, when data such as textures, render targets and vertex buffers are transferred from one VPU to another, the receiving VPU is synchronized with the VPU that is transmitting the data. This ensures that the receiving VPU does not attempt to use the data that is still being transferred by the transmitting VPU. The usage of such data by the receiving VPU before synchronization could result in incorrect operation and errors.

Another circumstance under which frame synchronization is used is Swap Lock. When devices external to a VPU card are used for compositing the final frame rendered by each VPU, the display buffer swap command should be sent to the display controllers on both VPUs in very close proximity in time.

Another circumstance under which frame synchronization is used is rendering to shared memory 305. When a render target resides in shared memory with both VPUs writing to different portions of this render target, both VPUs should be synchronized before the point of command execution when this render target can be used as a texture to be read from.

In various embodiments there are two fundamentally different approaches to accomplishing frame synchronization between VPUs. One is a VPU register-based semaphore approach, and the other is a memory-based semaphore approach. In a VPU register-based semaphore approach, a VPU B command processing unit (CP) is used to stall execution on one of the VPU B's own internal registers. VPU A has write access to these registers, so that it can release VPU B to continue execution. Note that in this discussion of frame synchronization, VPU A or VPU B are used arbitrarily, and could have reversed roles in the examples. There are two mechanisms by which the register-based semaphore mechanism is implemented in various embodiments. These are an IDCT Semaphore mechanism and a CP Wait semaphore mechanism.

The IDCT semaphore is controlled by an IDCT_RB_SEMAPHORE register. When IDCT RB SEMAPHORE.IDCT SEMAPHORE = 0, the CP waits on WAIT_UNTIL.WAIT_IDCT_SEMAPHORE. The semaphore can be increased by writing 1 to IDCT_RB_SEMAPHORE.INC_IDCT_SEMAPHORE, and this causes the wait to end.

**Table 1** shows a typical synchronization sequence for two VPUs according to an embodiment ofanIDCT semaphore frame synchronization method.

**Table 1**

| PM4 Stream | |
|---|---|
| ***Master*** | ***Slave*** |
| WAIT UNTIL.WAIT IDCT SEMAPHORE | WriteToMaster(IDCT_RB_SEMAPHORE.INC IDCT SEMAPHORE) |
| IDCT_RB_SEMAPHORE.DEC IDCT SEMAPHORE | WAIT_UNTIL.WAIT_IDCT_SEMAPHORE |
| WriteToSlave(IDCT-RB-SEMAPHORE INC IDCT SEMAPHORE) | IDCT_RB_SEMAPHORE.DEC_IDCT_SEMAPHORE |

To enable control of IDCT semaphore through memory-mapped input/output (MMIO), the IDCT_CSQ_CONTROL.CSQ_MODE field is first set to 1. MMIO is used by a peer-to-peer data transfer referred to as a "BLT".

In various embodiments the IDCT Semaphore is used by video/multimedia drivers, as well as by the driver 306. To use this semaphore for multiVPU operation, embodiments include a mechanism to share this resource between drivers. In different embodiments, video/multimedia drivers can function without access to the IDCT semaphore, but they may run more slowly in that case. To alleviate any potential performance deterioration, in one embodiment the video/multimedia driver checks a shared global flag that is set when 3D drivers are in multiVPU mode and limits the use of this semaphore. The frame synchronization operation relies on the IDCT_CSQ_CONTROL.CSQ_MODE bit being set to 1. If the video/multimedia driver requires the bit to be 0 for any reasons, the bit should be set to 1 again for multiVPU operations.

Synchronization methods using the IDCT approach include using a multiVPU PM4 player framework and semaphore updates using card to card data transfers into MMIO register space.

As previously stated, another register-based semaphore is a CP Wait semaphore mechanism.

**Table 2** shows a packet summary for a CP Wait semaphore frame synchronization method according to an embodiment.

**Table 2**

| **Packet Name** | **IT_OPCOD E** | **Description** |
|---|---|---|
| WAIT_SEMAPHORE | 0×22 | Wait in the CP micro-engine for semaphore to be zero |

According to the CP Wait semaphore, a VPU waits for a semaphore to be zero before continuing to process the subsequent command stream. In one embodiment, there are four microcode locations in VPU local memory set aside for use as semaphores. In other embodiments, there could be more or less locations set aside for use as semaphores.

The microcode of the CP reads a specified microcode local memory address. If the content is zero, the microcode continues to the next packet in the command stream. If the content is non-zero, the microcode loops and re-reads the particular local memory address until it is zero.

Optionally, a semaphore reset value can be supplied. If this value is supplied, the value is written to the semaphore memory referenced by the specified microcode local memory address. This can be used to automatically pause the CP at the next occurrence of the WAIT_SEMAPHORE with the specified semaphore offset.

An application that is currently executing can write non-zero values at any time to semaphore memory locations. The application can write a non-zero value to cause the CP micro-engine to pause at the next WAIT_SEMAPHORE packet in the command stream. This has the affect of pausing all VPU rendering that is queued in the indirect and ring buffers associated with the VPU. The application can then write a zero to the semaphore to allow the micro-engine to proceed. The application can write to the semaphore memory by a direct I/O register write to two registers as shown below:
1. Write the semaphore offset (0xFC 0xFD 0xFE or 0xFF to the CP_ME_RAM_ADDR register.
2. Write the semaphore value (zero or non-zero) to the CP_ME_RAM_DATAL register.

The format for a CP Wait semaphore packet according to an embodiment is shown in **Table 3.**

**Table 3**

| **Ordinal** | **Field Name** | **Description** |
|---|---|---|
| 1 | [HEADER ] | Header field of the packet. |
| 2 | Semaphore offset | This is the desired semaphore to test in the wait loop. This can be any one of 0xFC, 0xFD, 0xFE, 0xFF. |
| 3 | Semaphore reset | Optional. This value, if present, is written to the semaphore offset once the wait loop has been satisfied (i.e., once the semaphore is zero). |

In the case of a multiVPU frame synchronization function, the write to a semaphore is performed by another VPU, for example through VPU-to-VPU data transfer mechanisms as described herein.

Memory-based semaphore approaches will now be described. While register based semaphores are applicable and effective for various embodiments, memory-based approaches may offer additional flexibility for some embodiments. For example, memory-based approaches do not require that one VPU have the capability of writing to registers of another VPU. Additionally, the number of memory locations that can be used for frame synchronization purposes is unlikely to ever become inadequate. In contrast, the number of VPU registers that can be used for these purposes is limited. Because all VPUs can always read and write to system memory, a memory-based mechanism can be used for synchronization in an unlimited variety of multiVPU configurations. Embodiments described herein allow for implementation of multiple memory-based semaphores. Given that the memory required is only two DWORDs, the number of semaphores available with the memory-mapping mechanism is a practically unlimited.

**Table 4** illustrates a WAIT_MEM semaphore.

**Table 4**

| **Packet Name** | **IT OPCODE** | **Description** |
|---|---|---|
| WAIT_MEM | 0x2E | Wait in the CP micro-engine for VPU-accessible memory semaphore to be zero |

According to the WAIT_MEM semaphore mechanism, a VPU reads a VPU-accessible memory semaphore in memory. The VPU waits for the VPU-accessible memory semaphore to be zero before continuing to process the subsequent command stream. The semaphore can reside in any VPU-accessible memory (local or non-local). The base address of the semaphore is aligned to a DWORD boundary. The semaphore in memory consists of two DWORDs.

This packet has no ability to increment, decrement or otherwise change the contents of the memory semaphore.

The memory semaphore consists of two DWORDs: the actual semaphore; and an extra DWORD with a fixed value of two. The extra DWORD guarantees that the command processor micro-engine can loop properly in order to repeatedly test the semaphore value as necessary. The semaphore is organized as follows:

| |
|---|
| Semaphore value |
| Fixed value of 2 |

In one embodiment, this packet uses the Indirect Buffer #2 (IB2) to read the memory semaphore. Therefore, this packet cannot be initiated from an IB2.

The microcode reads the value in a specified device address. If the content is zero, the microcode continues to the next packet in the command stream. If the content is non-zero the microcode loops, re-reading the device address until the value read is zero.

If both ordinal 3 (SEM_LEN) and the DWORD in memory following the semaphore value are not equal to two, the CP micro-engine may become confused and ultimately hang the hardware.

The driver/application executing on the VPU can write non-zero values at any time to semaphore memory. The application can write a non-zero value to cause the CP micro-engine to pause at the next WAIT_MEM packet in the command stream. This has the affect of pausing all VPU rendering that is queued in the indirect and ring buffers. The application can then write a zero to the semaphore to allow the micro-engine to proceed. The format for a WAIT_MEM semaphore packet according to an embodiment is shown in **Table 5.**

**Table 5**

| **Ordinal** | **Field Name** | **Description** |
|---|---|---|
| 1 | [HEADER ] | Header field of the packet |
| 2 | SEM ADDR[31:2] | Memory semaphore device address (DWORD aligned) This value is written to the CP lB2 BASE in order to read the semaphore |
| 3 | SEM_LEN This | Memory semaphore length value MUST be 2 This value is written to the CP_IB2_BUFSlZ in order to read the semaphore the first time |

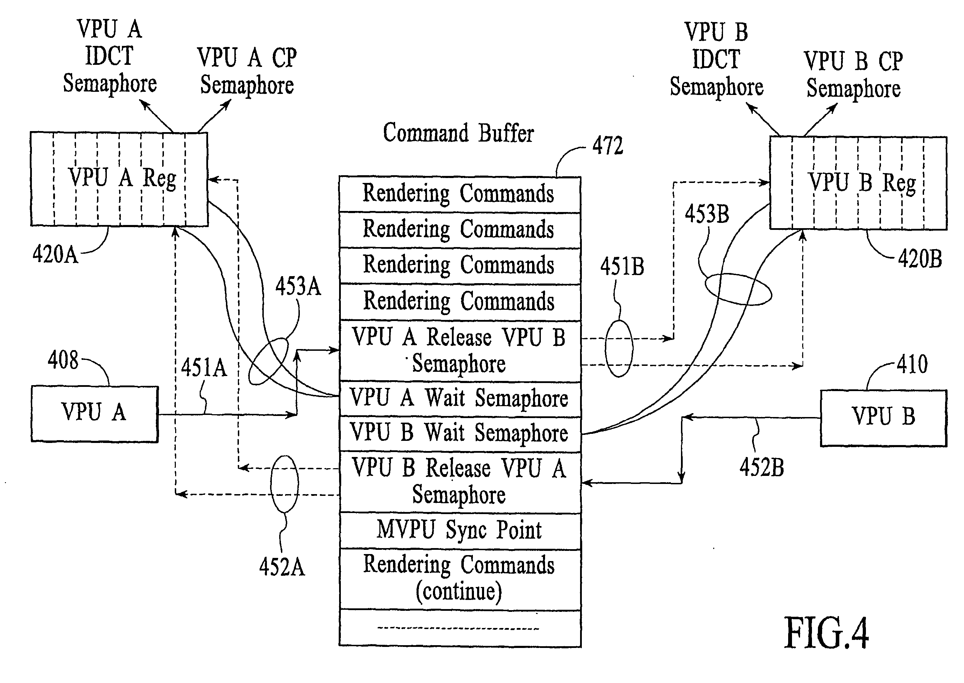

**Figure 4** is a diagram illustrating a register-based semaphore mechanism for frame synchronization according to an embodiment. A VPU A 408 and a VPU B 410 are in a multiVPU system. The VPU A 408 has access to registers 420 A, which are storage locations that are usable for storing various types of data. The VPU B 408 has access to registers 420 B, which are storage locations that are usable for storing various types of data. The VPU A 408 also has access to VPU B registers 420 B. The VPU B 410 also has access to VPU A registers 420 A.

A command buffer 472 is shown including various commands to be executed by both VPU A 408 and VPU B 410. Reading from the top of the command buffer 472, there are four rendering commands, and then a "VPU A release VPU B semaphore" command. As shown by an arrow 451 A from the VPU A 408 to the command buffer 472, and broken arrows 451 B from the command buffer 472 to the VPU B registers 420 B, this command has the effect of writing a value to the VPU B register 420 B to release VPU B.

The next command in the command buffer 472 is a VPU A wait semaphore command. As shown by lines 453 A, this command has the effect of writing a value or values to the VPU A 408 registers 420 A. The value prevents the VPU A from continuing execution, as previously described.

The next command in the command buffer 472 is a VPU B wait semaphore command. As shown by lines 453 B, this command has the effect of writing a value or values to the VPU B 410 registers 420 B. The value prevents the VPU B from continuing execution, as previously described.

The next command in the command buffer 472 is a VPU B release VPU A semaphore command. As shown by an arrow 452 B from the VPU B to the command buffer 472, and by broken arrows 452 A to the registers 420 A, this has the effect of writing values(s) to the registers 420 A that release the VPU A to continue execution as previously described. The next line in the command buffer states that a "MVPU (multiVPU) synchronization (sync) point" occurs with the command at that point in the buffer. MVPU sync points include any of the circumstances that require frame synchronization among the VPUs in a system as described herein. Rendering commands continue after the sync point.

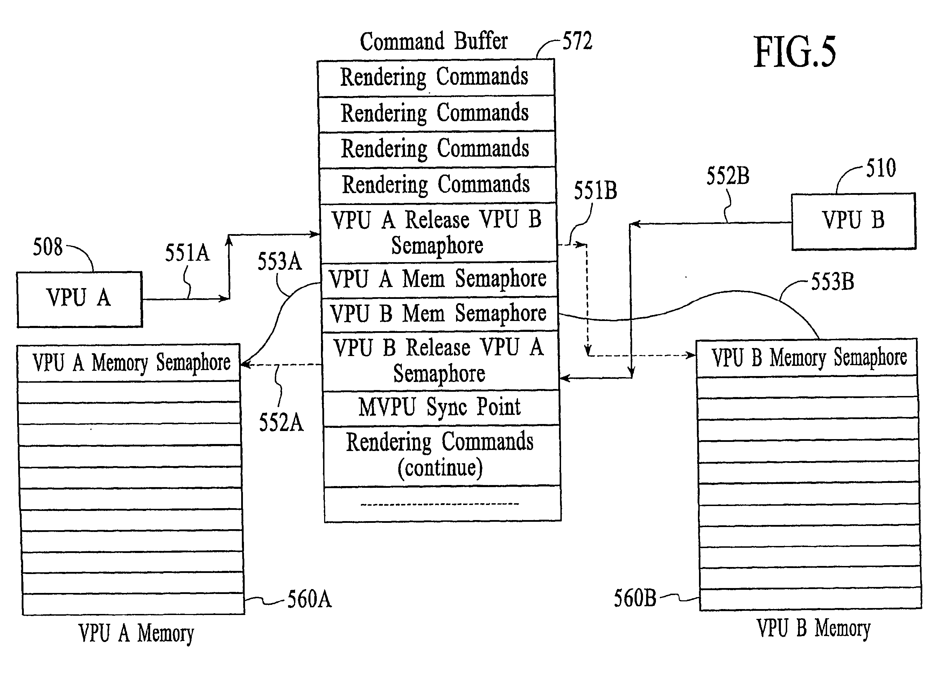

**Figure 5** is a diagram illustrating a memory-based semaphore mechanism for frame synchronization according to an embodiment. A VPU A 508 and a VPU B 510 are in a multiVPU system. The VPU A 508 has access to VPU A memory 560 A. The VPU B 510 has access to VPU B memory 560 B. The VPU A 508 also has access to VPU B memory 560 B. The VPU B 510 has also access to VPU A memory 560 A. The memory 560 can be physically located anywhere. For example, memories 560 A and 560 B can be different areas in a system memory accessible via a PCIE bus. Memories 560 A and 560 B can alternatively be located in local memory of one or more VPUs. Memory 560 can also be distributed across more than one physical location.

A command buffer 572 is shown including various commands to be executed by both VPU A 508 and VPU B 510. Reading from the top of the command buffer 572, there are four rendering commands, and then a "VPU A release VPU B semaphore" command. As shown by an arrow 551 A from the VPU A 508 to the command buffer 572, and broken arrows 551 B from the command buffer 572 to the VPU B memory 560 B, this command has the effect of writing to the VPU B memory 560 B to release VPU B.

The next command in the command buffer 572 is a VPU A memory semaphore command. As shown by lines 553 A, this command has the effect of stalling execution of VPU A 508 when VPU A 508 reads the location in memory 560 A.

The next command in the command buffer 572 is a VPU B memory semaphore command. As shown by lines 553 B, this command has the effect of stalling execution of VPU B 510 when VPU B 510 reads the location in memory 560 B.

The next command in the command buffer 572 is a VPU B release VPU A semaphore command. As shown by an arrow 552 B from the VPU B 510 to the command buffer 572, and by broken arrows 552 A to the memory 560 A, this has the effect of writing values(s) to the memory 560 A that release the VPU A to continue execution as previously described. The next line in the command buffer states that a "MVPU (multiVPU) sync point" occurs with the command at that point in the buffer. MVPU sync points include any of the circumstances that require frame synchronization among the VPUs in a system as described herein. Rendering commands continue after the sync point.

**Figure 6** is a block diagram of various components of a system 600 according to an embodiment. The system 600 includes a master VPU card 652 and a slave VPU card 654. The master VPU card 652 includes a master VPU 608, and the slave VPU card 654 includes a slave VPU B 610. In one embodiment, VPUs 608 and 610 each communicate via a PICE bus 634. In one embodiment, the PCIE bus 634 is a X16 bus that is split into two X8 PCIE buses 635. Each of the VPUs A 608 and B 610 is connected to a bus 635. In one embodiment, VPU A 608 and VPU B 610 communicate only through the bus 635. In alternative embodiments, VPU A 608 and VPU B 610 communicate partially through bus 635 and partially through dedicated intercard connection 637. In yet other embodiments, VPU A 608 and VPU B 610 communicate exclusively through the connection 637.

The master VPU card 652 includes an IM 612. In an embodiment in which VPU A 608 and VPU B 610 communicate via the bus 635, each VPU processes frame data as instructed by the driver. As an example in Figure 6, the system 600 is performing video processing in a "scissoring" load balancing mode as described below. Master VPU A 608 generates an output 609 and slave VPU B 610 generates an output 611. The outputs 609 and 611 are input to the IM 612 for compositing, as described further below. In one embodiment, the slave VPU B 610 transfers its output 611 to the IM 612 via the buses 635 and 634 as shown by the dotted path 663. In one embodiment, the slave VPU B 610 transfers its output 611 to the IM 612 via the dedicated intercard connection 637 as shown by the dotted path 661. The IM 612 combines the outputs 609 and 611 to produce a frame for display. This frame is output to a display 630 by the IM 612 via a connector 641.

The master VPU card 652 includes connectors 640 and 641. The slave VPU card 654 includes connectors 642 and 643. Connectors 640, 641, 642 and 643 are connectors appropriate for the purpose of transmitting the required signals as known in the art. For example, the connector 641 is a digital video in (DVI) connector in one embodiment. There could be more or less than the number of connectors shown in the Figure 600.

In one embodiment, the various configurations described herein are configurable by a user to employ any number of available VPUs for video processing. For example, the system 600 includes two VPUs, but the user could choose to use only one VPU in a pass-through mode. In such a configuration, one of the VPUs would be active and one would not. In such a configuration, the task sharing or load balancing as described herein would not be available. However, the enabled VPU could perform conventional video processing. The dotted path 665 from VPU card B 654 to the display 630 indicates that slave VPU B 610 can be used alone for video processing in a pass-through mode. Similarly, the master VPU A 608 can be used alone for video processing_in a pass-through mode.

**Figure 7** is a more detailed block diagram of a system 700, which is a configuration similar to that of Figure 6 according to an embodiment. The system 700 includes two VPU cards, a master VPU card 752 and a slave VPU card 754. The master VPU card 752 includes a master VPU A 708, and the slave VPU card 754 includes a slave VPU B 710.

The master VPU card 752 also includes a receiver 748 and a transmitter 750 for receiving and transmitting, in one embodiment, TDMS signals. A dual connector 745 is a DMS connector in an embodiment. The master card further includes a DVI connector 746 for outputting digital video signals, including frame data, to a display. The master VPU card 752 further includes a video digital to analog converter (DAC). An interlink module (IM) 712 is connected between the VPU A 708 and the receivers and transmitters as shown. The VPU A 708 includes an integrated transceiver (labeled "integrated") and a digital video out (DVO) connector.

The slave VPU card 754 includes two DVI connectors 747 and 748. The slave VPU B 710 includes a DVO connector and an integrated transceiver. As an alternative embodiment to communication over a PCIE bus (not shown), the master VPU card 752 and the slave VPU card 754 communicate via a dedicated intercard connection 737.

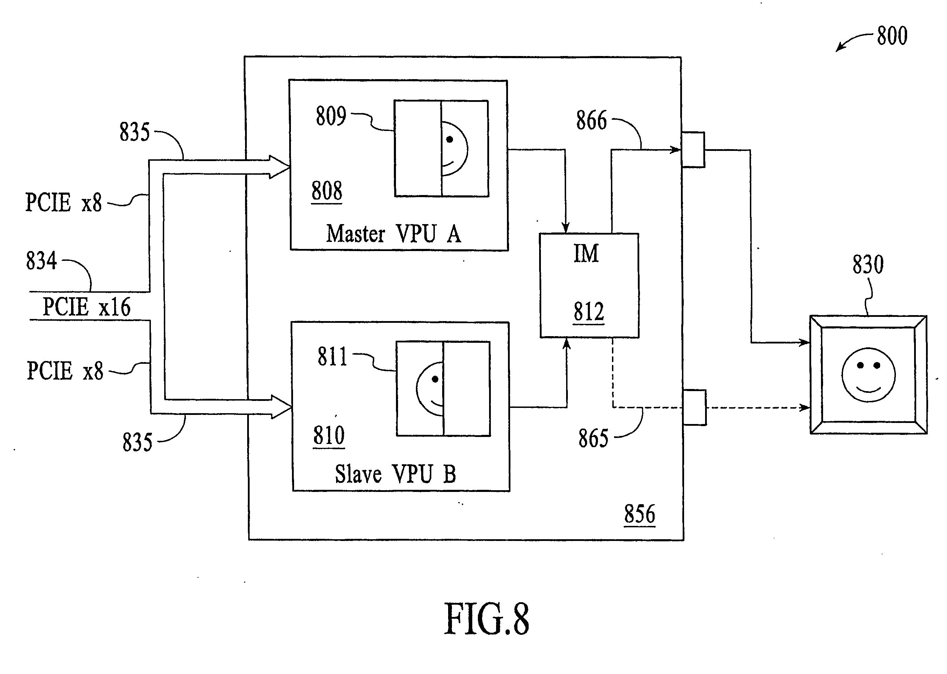

Figures 8-9 are diagrams of further embodiments of system configurations. **Figure 8** is a diagram of a one-card system 800 according to an embodiment. The system 800 includes a "supercard" or "monstercard" 856 that includes more than one VPU. In one embodiment, the supercard 856 includes two VPUs, a master VPU A 808 and a slave VPU B 810. The supercard 856 further includes an IM 812 that includes a compositor for combining or compositing data from both VPUs as further described below. It is also possible, in other embodiments, to have a dedicated on-card inter-VPU connection for inter-VPU communication (not shown). In one embodiment, the master VPU A 808 and the slave VPU B 810 are each connected to an X8 PCIE bus 835 which comes from a X16 PCIE bus 834.

The system 800 includes all of the multiple VPU (also referred to as multiVPU) functionality described herein. For example, the master VPU A 808 processes frame data as instructed by the driver, and outputs processed frame data 809 to the IM 812. The slave VPU B 810 processes frame data as instructed by the driver, and outputs processed frame data 811, which is transferred to the IM 812 for combining or compositing. The transfer is performed via the PCIE bus 834 or via a dedicated inter-VPU connection (not shown), as previously described with reference to Figure 600. In either case, the composited frame is output from the IM 812 to a display 830.

It is also possible to disable the multiVPU capabilities and use one of the VPUs in a pass-through mode to perform video processing alone. This is shown for example by the dashed path 865 which illustrates the slave VPU B 810 connected to a display 830 to output frame data for display. The master VPU A 808 can also operate alone in pass-through mode by outputting frame data on path 866.

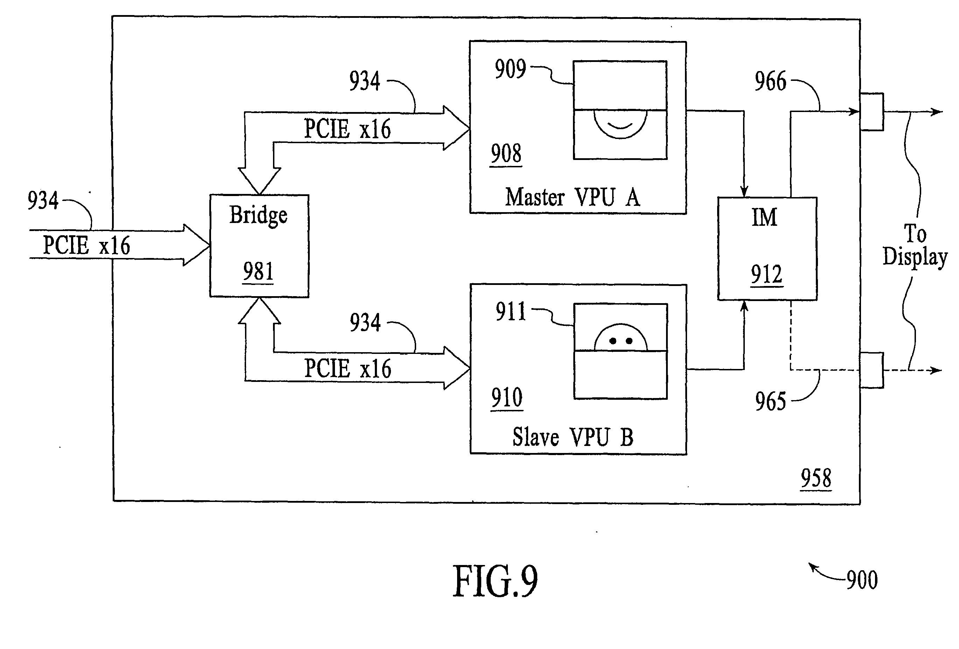

**Figure 9** is a diagram of a one-card system 900 according to an embodiment. The system 900 includes a "supercard" or "monstercard" 958 that includes more than one VPU. In one embodiment, the supercard 958 includes two VPUs, a master VPU A 908 and a slave VPU B 910. The supercard 958 further includes an IM 912 that includes a compositor for combining or compositing data from both VPUs as described herein. It is also possible, in other embodiments, to have a dedicated on-card inter-VPU connection for inter-VPU communication (not shown). In one embodiment, the master VPU A 908 and the slave VPU B 910 are each connected to a X16 PCIE bus 934 through an on-card bridge 981.

The system 900 includes all of the multiVPU functionality described herein. For example, the master VPU A 908 processes frame data as instructed by the driver, and outputs processed frame data 909 to the IM 912. The slave VPU B 910 processes frame data as instructed by the driver, and outputs processed frame data 911, which is transferred to the IM 912 for combining or compositing. The transfer is performed via the PCIE bus 934 or via a dedicated inter-VPU connection (not shown), as previously described with reference to Figure 600. In either case, the composited frame is output from the IM 912 to a display (not shown).

It is also possible to disable the multiVPU capabilities and use one of the VPUs in a pass-through mode to perform video processing alone. This is shown for example by the dashed path 965 which illustrates the slave VPU B 910 connected to an output for transferring a frame for display. The master VPU A 908 can also operate alone in pass-through mode by outputting frame data on path 966.

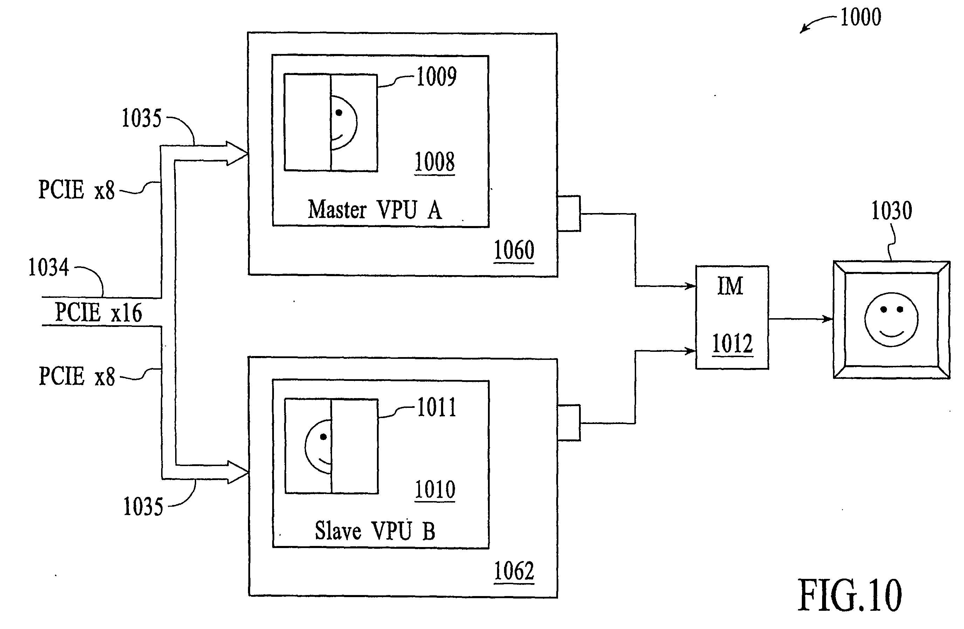

**Figure 10** is a diagram of a two-card system 1000 according to an embodiment. The system 1000 includes two peer VPU cards 1060 and 1062. VPU card 1060 includes a VPU A 1008, and VPU card 1062 includes a VPU 1010. In one embodiment, VPU A 1008 and VPU 1010 are identical. In other embodiments VPU A 1008 and VPU B 1010 are not identical. VPU A 1008 and VPU 1010 are each connected to an X8 PCIE bus 1035 that is split from a X16 PCIE bus 1034. VPU A 1008 and VPU 1010 are further each connected to output data through a card connector to an interl ink module (IM) 1012.. In one embodiment, the IM 1012 is an integrated circuit in a "dongle" that is easily connectable to VPU card 1060 and VPU card 1062. In one embodiment, the IM 1012 is an integrated circuit specifically designed to include all of the compositing functionality described herein. The IM 1012 merges or composites the frame data output by VPU A 1008 and VPU 1010 and outputs a displayable composited frame to a display 1030.

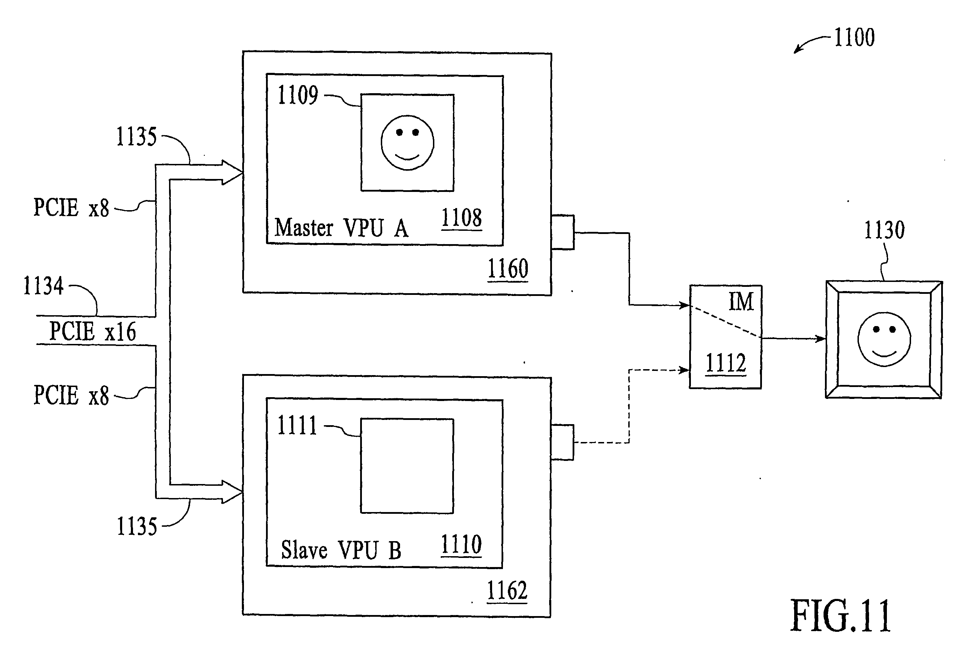

**Figure 11** is a diagram of a two-card system 1100 according to an embodiment. The system 1100 is similar the system 1000, but is configured to operate in a by-pass mode. The system 1100 includes two peer VPU cards 1160 and 1162. VPU card 1160 includes a VPU A 1108, and VPU card 1162 includes a VPU B 1110. In one embodiment, VPU A 1108 and VPU 1110 are identical. In other embodiments VPU A 1108 and VPU B 1110 are not identical. VPU A 1108 and VPU B 1110 are each connected to an X8 PCIE bus 1135 that is split from a X16 PCIE bus 1134. VPU A 1108 and VPU 1110 are further each connected through a card connector to output data to an interlink module (1M) 1112. In one embodiment, the IM 1112 is an integrated circuit in a "dongle" that is easily connectable to VPU card 1160 and VPU card 1162. In one embodiment, the IM 1112 is an integrated circuit specifically designed to include all of the compositing functionality described herein. The IM 1112 is further configurable to operate in a pass-through mode in which one of the VPUs operates alone and the other VPU is not enabled. In such a configuration, the compositing as described herein would not be available. However, the enabled VPU could perform conventional video processing. In Figure 11, VPU A 1108 is enabled and VPU B 1110 is disabled, but either VPU can operate in by-pass mode to output to a display 1130.

The configurations as shown herein, for example in Figures 6-11, are intended as non-limiting examples of possible embodiments. Other configurations are within the scope of the invention as defined by the claims. For example, other embodiments include a first VPU installed on or incorporated in a computing device, such as a personal computer (PC), a notebook computer, a personal digital assistant (PDA), a TV, a game console, a handheld device, etc. The first VPU can be an integrated VPU (also known as an integrated graphics processor, or IGP), or a non-integrated VPU. A second VPU is installed in or incorporated in a docking station or external enclosed unit. The second VPU can be an integrated VPU or a non-integrated VPU.

In one embodiment, the docking station is dedicated to supporting the second VPU. The second VPU and the first VPU communicate as described herein to cooperatively perform video processing and produce an output as described. However, in such an embodiment, the second VPU and the first VPU communicate via a cable or cables, or another mechanism that is easy to attach and detach. Such an embodiment is especially useful for allowing computing devices which may be physically small and have limited video processing capability to significantly enhance that capability through cooperating with another VPU.

It will be appreciated by those of ordinary skill in the art that further alternative embodiments could include multiple VPUs on a single die (e.g., two VPUs on a single die) or multiple cores on a single silicon chip.

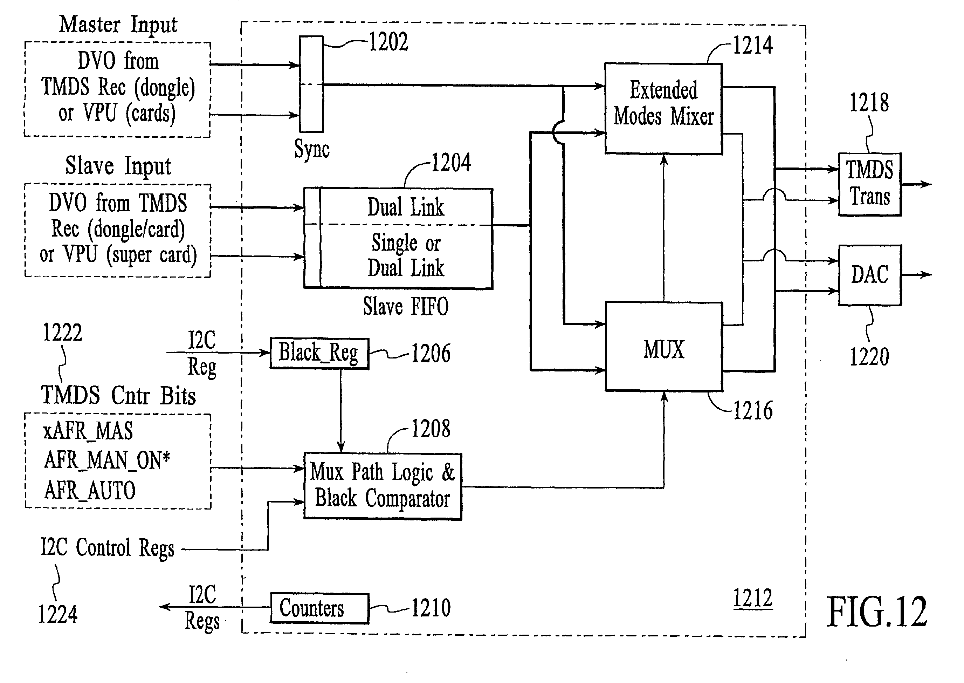

**Figure 12** is a block diagram of an interlink module (IM) 1212 according to an embodiment. All rendering commands are fetched by each VPU in the system. In any one of the multiVPU configurations described herein, after the VPUs execute the fetched commands, the IM 1212 merges the streams of pixels and control lines from the multiple VPUs and outputs a single digital video output (DVO) stream.

The IM 1212 includes a master input port that receives a DVO stream from a master VPU. The master VPU input can be from a TDMS receiver in a "dongle" configuration such as those shown in Figures 10 and 11. The master VPU input can alternatively come from a master VPU on a master VPU card in a multi-card configuration, as shown for example in Figures 6 and 7. A synchronization register 1202 receives the DVO data from the master VPU.

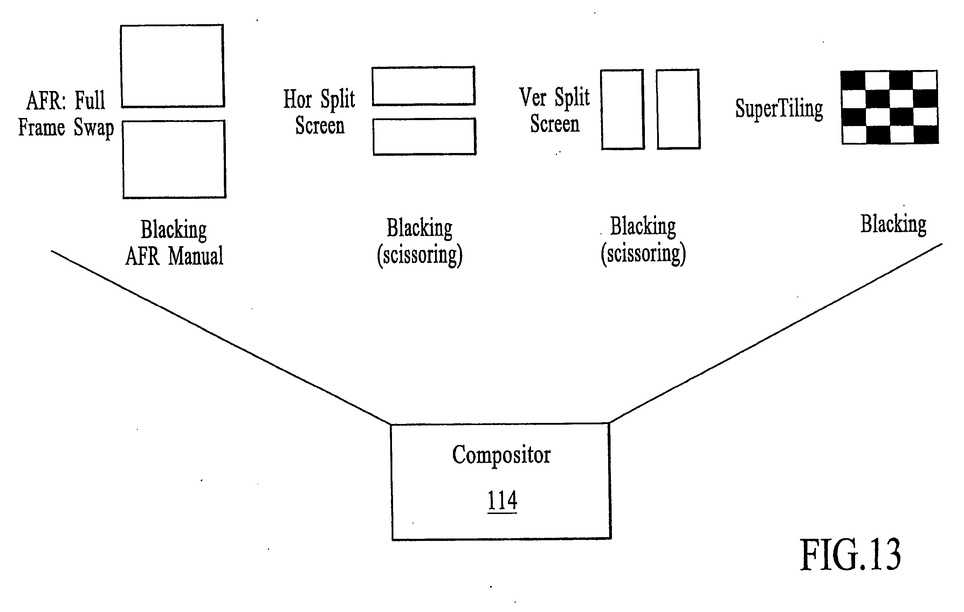

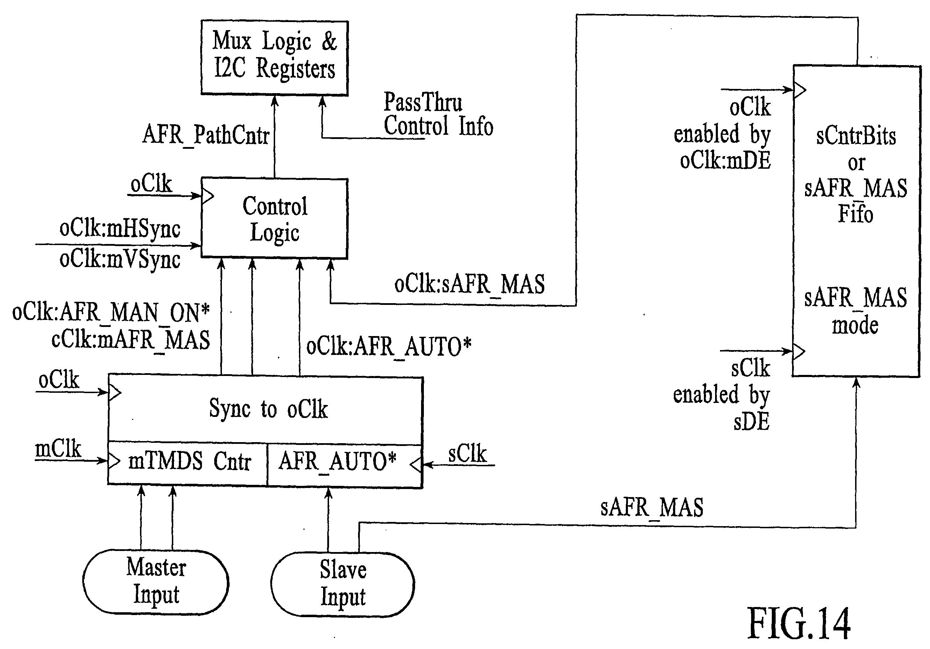

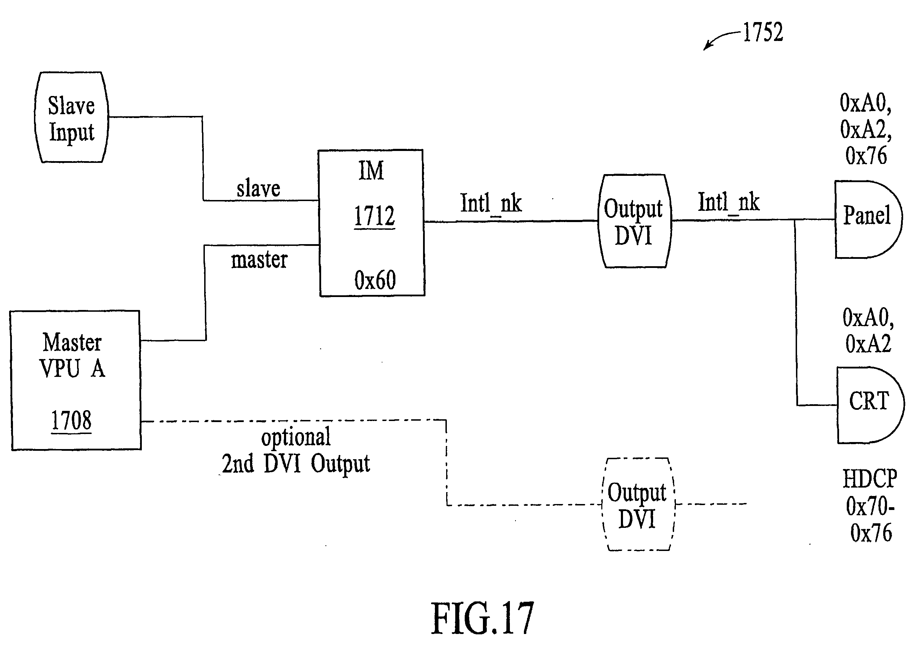

The IM 1212 further includes a slave input port that receives a DVO stream from a slave VPU. The slave VPU input can be from a TDMS receiver in a "dongle" configuration such as those shown in Figures 17 and 18 or a card configuration as in Figures 13 and 14. The slave VPU input can alternatively come from a slave VPU on a "super" VPU card configuration, as shown for example in Figures 8 and 9. The IM 1212 includes FIFOs 1204 on the slave port to help synchronize the input streams between the master VPU and the slave VPU.

The input data from both the master VPU and the slave VPU are transferred to an extended modes mixer 1214 and to a multiplexer (MUX) 1216. The IM 1212 is configurable to operate in multiple compositing modes, as described herein. When the parts of the frame processed by both VPUs are combined, either by the extended modes mixer 1214, or by selecting only non-black pixels for display, as further described below, the entire frame is ready to be displayed.

Control logic determines which compositing mode the IM 1212 operates in. Depending on the compositing mode, either the extended modes mixer or the MUX will output the final data. When the MUX is used, control logic including a black register 1206 and a MUX path logic and black comparator 1208, determines which master or slave pixel is passed through the MUX . Data is output to a TDMS transmitter 1218 or a DAC 1220.

The black register is used to allow for software to set a final black value that has been gamma adjusted.

In one embodiment, the inter-component communication among the VPUs and the IM 1212 includes I2C buses and protocols.

Operating modes, including compositing modes; are set through a combination of 12C register bits 1224 and TMDS control bits 1222 as shown in **Table 6.**

**Table 6 : Operational Modes and Control Bits**

| **Category** | | | | |
|---|---|---|---|---|
| **Main** | **Sub** | **12C Bits** | **TMDS Cntr Bits** | **Notes** |
| Passthru | Slave | INTERLINK_ENABLE = 0 | n/a | Uses 1^{st} 12C access to determine path |
| | | CONTROL_BITS_2:Bit 3=x | | |
| Passthru | Master | INTERLINK_ENABLE = 0 | n/a | Uses 1^{st} I2C access to determine path |
| | | CONTROL_BITS_2:Bit 3=x | | |
| Interlink | AFR_MANUAL | INTERLINK_ENABLE = 1 | AFR_MAN_ON* = 0 | xAFR_MAS state changes controls the next data path |
| | | CONTROL_BITS_2:Bit 3=0 | AFR_AUTO* = 1 | |
| Interlink | AFR_AUTO | INTERLINK_ENABLE = 1 | AFR_MAN_ON* =0 | |
| | | CONTROL BITS 2:Bit | AFR_AUTO*=0 | |
| | | 3=0 | | |
| Interlink | BLACKING | INTERLINK_ENABLE = | AFR_MAN_ON* I = I | Uses black pixels to determine data path |
| | | CONTROL_BITS_2:Bit 3=0 | AFR_AUTO* = x | |
| Interlink | Super AA | INTERLINK_ENABLE = x | n/a | CONTROL BITS_2:Bit 4-7 determines extended mode |
| | | CONTROL_BITS_2:Bit 3 = 1 | | |

There are two separate data paths through the IM 1212 according to an embodiment. The two input pixel streams from the respective VPUs are either processed through the MUX 1216 (in pass-through mode, or "standard" interlink modes), or through the mixer 1214 in extended modes. In one embodiment, the extended modes include a super antialiasing mode, or "SuperAA mode", as described in copending U.S.. Patent Application Serial No. *Not Yet Assigned,* titled "Antialiasing System and Method", which is hereby incorporated by reference in its entirety.

In the MUX 1216, just one pixel from either VPU A or VPU B is selected to pass through, and no processing of pixels is involved. In the extended modes mixer 1214, processing is done on a pixel by pixel basis. In the SuperAA mode, for example, the pixels are processed, averaged together, and reprocessed. In one embodiment, the processing steps involve using one or more lookup tables to generate intermediate or final results.

The selection between the MUX 1216 path and the mixer 1214 path is determined by I2C register bits and control bits. For example, the mixer 1214 path is selected if:

```
                      ENABLE_INTERLINK = 1 (I2C register)
               and CONTROL_BITS_2 : Bit 3 and Bit 4 = 1 (ExtendedModes and
 SuperAA)
       (else MUX).
```

In one embodiment, the IM has three ports, two input ports and one output port.

The output port configuration is split into two parts. The DAC is driven across a 24 bit single data rate (SDR) interface. The TMDS is driven with a double data rate (DDR) interface; a 12 pin interface for TMDS single link, and a 24 pin interface for TMDS dual link. The I2C control bit registers determines this configuration.

There are three primary pixel clock domains. Both the master and slave inputs come in on their own separate domains. The IM uses the DVO clock domain for all internal paths and the final output. The DVO clock is generated by the active input port in pass-through mode and from the master input clock in interlink mode.

The master input bus (data and control) goes through a synchronizer as it passes into the DVO clock domain, imparting a 2-4 clock delay. The slave input bus (data and control) goes into a FIFO which is synchronized on its output to the DVO clock domain. The outputs of both paths are routed to a MUX or extended modes mixer which then outputs a single bus width data output.

In slave pass-through mode the slave FIFO is set into pass-through mode, while in interlink mode, it is used as a standard FIFO. For slave pass-through mode, the control bits go through the FIFO with the pixel data. In interlink mode, sAFR_MAS goes through with the data, and the control bits are ignored from the slave input port.

I/Os that use DDR clocking are split into double wide buses (e.g., 12-bit DDR input becomes 24 bits internally). This is to avoid having to run the full clock speed through the IM.

In one embodiment, there is one FIFO on the IM, located on the slave channel. Twenty-four (24) bits of pixel data flow through the FIFO in single TMDS mode, and 48 bits of data flow through the FIFO in dual TMDS mode. The slave port's control bits are also carried through this FIFO when in pass-through mode, slave path. When in interlink mode, the control bits are ignored, and instead of the control bits the sAFR_MAS bit is carried through in parallel with the pixel data.

When in single link TMDS mode (CONTROL_BITS: Dual_Link_Mode bit = 0), the extra 24 bits of data for dual link are not clocked to conserve power.

On power up the FIFOs should be set to empty. FIFOs are also cleared when the ENABLE_INTERLINK bit toggles to 1 or if the CONTROL_ONESHOTS : FIFO_Clear bit is set to 1.

The slave FIFO has two watermarks (registers FIFO_FILL, FIFO_STOP), The IM drives the SlavePixelHold pin depending on how full the FIFO is and the values in these registers. If the slave FIFO has FIFO_FILL or fewer entries in use, the SlavePixelHold should go low. If the slave FIFO has FIFO_STOP or more entries in use, the SlavePixelHold should go high.

"Load balancing" refers to how work is divided by a driver for processing by multiple system VPUs. In various embodiments, the processed data output by each VPU is composited according to one of multiple compositing modes of the IM 12, also referred to herein as "interlinking modes" and "compositing modes". The IM 1212 supports numerous methods for load balancing between numerous VPUs, including super-tiling, scissoring and alternate frame rendering ("AFR"), all of which are components of "Blacking". These modes are described below. **Figure 13** is a diagram illustrating various load balancing modes performed by the system as described. Frame data from various VPUs in the system is processed according to a load balancing mode and composited in a compositor 114 (as in Figure 1 for example), as described herein, to generate a displayable frame.

For Super-Tiling, software driver control determines the tile size and alternates between image data and black tiles so that, between the master and slave VPUs, each frame is fully painted. The IM 1212 passes through the non-black pixels (image data) creating a super tiling-type split between the master and slave inputs. The tile sizes can be dynamically adjusted every pair of master and slave frames if desired. Super-Tiling may divide a display screen into a chess board pattern for which each square/tile is 32x32, pixels for example. The image tiles are rendered on a first VPU of a multi-VPU system while the black tiles are rendered on a second VPU. Super-Tiling provides fine grain load sharing for pixel processing within a frame of rendering, a more even distribution of pixel load relative to other load balancing methods, and less complex driver implementation.

Scissoring divides a display screen into two parts, and this division can be horizontal or vertical. While a horizontal split may be more convenient when considering software implementation and data transfer flexibility, a vertical split may provide better load balancing. In the context of multiple VPUs, scissoring provides optimization opportunities in the direction of parallelizing data transfers with 3D rendering. Scissoring also supports methods in which the slave VPU (which performs the majority of data transfers) does less work than the master VPU, thereby facilitating dynamic load balancing schemes between the master and the slave VPUs.

Scissoring includes both Vertical Split Screen Blacking Control and Horizontal Split Screen Blacking Control. With Vertical Split Screen Blacking Control, the drivers determine which side of a frame are output from the master and slave VPU, so that between the two VPUs every frame is completely painted. The part of a frame that each VPU does not handle is cleared to black by the drivers. The IM 1212 then interlinks the two frames as a vertical split between the master and slave VPU. The split does not have to be an even split of the screen (e.g., 50% rendered by each VPU) and can be dynamically adjusted for every pair of master and slave frames.

Under Horizontal Split Screen Blacking Control, the software drivers determine which upper or lower section of a frame are output from the master and slave VPU. The drivers then clear to black the portions that will not hold valid frame buffer data and the IM 1212 mixes the inputs as a horizontal split of the inputs. The split does not have to be an even split of the screen (e.g., 50% rendered by each VPU) and can be dynamically adjusted for every pair of master and slave frames.

Alternate Frame Rendering ("AFR") performs load balancing at a frame level. A "frame" as referred to herein includes a sequence of rendering commands issued by the application before issuing a display buffer swap/flip command. AFR generally passes each new frame through to the output from alternating inputs of the IM 1212. One VPU renders the even-numbered frames and the other VPU renders the odd-numbered frames, but the embodiment is not so limited. The AFR allows performance scaling for the entire 3D pipeline, and avoids render-to-texture card-to-card data transfers for many cases.

The IM 1212 of an embodiment may perform AFR under Manual Control, Manual Control with automatic VSync switching, or Blacking Control. When using Manual Control, the drivers manually select an input of the IM 1212 for a frame after the next VSync. Using AFR using Manual Control with VSync switching, and following a next vertical blank, the IM 1212 chooses the input coupled to the master VPU as the output source and then automatically toggles between the master and slave VPU inputs on every VSync. Using Blacking Control, the drivers alternate sending a fully painted frame versus a cleared-to-black frame from the master and slave VPUs; the IM 1212 toggles between the master and slave frames as a result.

Other compositing strategies are available and are not limited by the IM 1212.

For example, extended interlink modes are also available that go beyond the load sharing usage of the Manual AFR and Blacking modes. These modes, while not the standard interlinking used for pure speed gains by sharing the processing between multiple VPUs, enhance the system quality and/or speed by offloading functionality from the VPUs to the IM 1212. As one example of an extended mode, the IM 1212 of an embodiment supports the "SuperAA" mode previously referred to in addition to the Manual AFR and Blacking modes.

Referring again to Figure 12, the IM 1212 supports multiple input modes and single or dual link TMDS widths, depending on the input connectivity. The IM 1212 also includes counters that monitor the phase differences between the HSyncs and VSyncs of the two inputs. The counters may include a pixel/frame counter to assist in matching the clocks on the two input streams.

Referring to **Table 7,** in one embodiment, the IM 1212 has three counters 1210. Each counter increments the master pixel clock and uses one of the VSyncs for latching and clearing.

If a read of an I2C counter is occurring, the update to that register is held off until after the read is completed. If a write of the register is occurring, then the read is delayed until the write is completed. Read delays are only a few IM internal clocks and therefore are transparent to software.

**Table 7: IM Counters**

| **Counter Name** | **Bits** | **Clock** | **Description** |
|---|---|---|---|
| CLKS_PER_FRAME_CTR Pixel | 22 | Master | Number of master clocks per I slave frame |
| | | | - uses slave VSync to determine frame edges |
| | | | - every slave VSync latches the count to CLKS_PER_FRAME and resets this counter |
| S2M_VSYNC_PHASE_CTR | 11 I | Master Pixel | Number of lines displayed between slave VSync and master VSync |
| | | | - latched to S2M_VSYNC_PHASE every master VSync |
| | | | - resets the count to 0 every slave VSync |
| S2M_HSYNC_PHASE_CTR | 12 Pixel | Master | Number of pixels displayed between slave HSync and master HSync |
| | | | - latched to S2M_HSYNC_PHASE every master HSync |
| | | | - resets the count to 0 every slave HSync |

The IM 1212 may be used in a number of configurations as described above. In one configuration, referred to herein as a "dongle", the IM 1212 receives two separate TMDS outputs, one each from two separate VPUs, and brings them onto the dongle through two TMDS receivers. The separate receivers then output two DVO streams directly into the IM 1212 of the dongle. The IM 1212 mixes the two received inputs into a single output stream. The output DVO signals from the IM 1212 are then fed either to a TMDS transmitter or through a DAC, both of which drive out through a standard DVI-I connector on the dongle.

In another configuration, referred to herein as an "on-card" configuration, the IM 1212 receives two streams of DVO signals directly from two VPUs that reside on the same card as the IM 1212. This on-card configuration does not use TMDS transmitters or receivers between the VPUs and the IM 1212, in contrast to the dongle configuration. The IM 1212 mixes the two received inputs into a single output stream. The output DVO signals from the IM 1212 are then fed either to a TMDS transmitter or through a DAC, both of which drive out through a standard DVI-I connector for example.

The input streams received at the IM 1212 inputs are referred to herein as the "master input" and the "slave input", and are received from the master and slave VPUs, ' respectively. The master and slave VPUs may be on two separate cards or on a single "super" card. Either VPU can function as the master or slave VPU.

The master VPU is used as the primary clock to which the slave is synchronized ("synced"). The master clock is not adjusted or tuned other than the normal card initialization process. The slave VPU is adjusted to run slightly ahead of the master VPU to allow for synchronization and FIFO latencies. The slave VPU uses a larger FIFO in order to compensate for variances between the pixel clock rates of the two VPUs, while the master VPU path uses a shallow FIFO only to synchronize the master input clock domain to the internal DVO clock domain. Flow control between the master and slave VPUs includes initial synchronization of the two VPUs and then ongoing adjustments to the slave VPU to match the master VPU. The flow control includes clock adjustments via a pixel hold off signal generated by the IM 1212 or driver action in response to counters within the IM 1212.

The IM 1212 as described above supports numerous operational modes, including Pass-through Mode and various Interlink Modes, as illustrated in Table 1. These operational modes are set through a combination of I2C register bits and the TMDS Control Bits as described herein.

Pass-through Mode is a mode in which an input of the IM 1212 is passed directly through to the output (monitor). The input port used is chosen at power-up by the initial toggling of an I2C clock. The path can be changed again by switching the ENABLE_INTERLINK register from "1" back to "0" and then toggling the I2C clock of the desired port.

Interlink Modes include numerous modes in which the IM 1212 couples inputs received from the master and slave VPUs to an output in various combinations. Dual VPU Interlink Modes of an embodiment include but are not limited to Dual AFR Interlink Mode and Dual Blacking Interlink Mode.

Dual VPU Interlink Modes are modes in which both VPUs are being used through manual AFR control or through blacking modes. Both IM 1212 ports are output continuously during operations in these modes.

Dual AFR Interlink Mode includes modes in which the source of the IM 1212 output is alternated between the two input ports. It can either be done manually by the IM 1212 drivers or automatically once started based on VSync. Control of the Dual AFR Interlink Mode includes use of the following bits/states: AFR_MAN_ON* = low; AFR_AUTO* = high or low; AFR_MAS (used to control which card is outputting at the time or to set the first card for the Auto switch).

**Figure 14** shows path control logic of the IM. oClk is the output pixel clock. It is generated in slave passthru directly from the sClk from the slave port. In interlink or master pass-through modes, it is generated directly from the mClk from the master port with the same timings. oClk:mDE is simply the master port's mDE signal synchronized into the oClk time domain.

Dual Blacking Interlink Mode includes modes in which both VPUs output in parallel and the IM 1212 forms an output by selecting pixels on a pixel-by-pixel basis by transmitting black pixel values for any pixel of any VPU that should not be output. Control of the Dual Blacking Interlink Mode includes use of the following bit/state: AFR_MAN_ON* = high.

AFR_MAN_ON* is sent across the master TMDS Control Bit bus on bit no 2. It is clocked in with mClk, one clock before the rising edge of mDE after the rising edge of mVSync. The action in response to it takes place before the first pixel of this mDE active period hits the MUX. Other than this specific time, there is no direct response to AFR_MAN_ON*.

When AFR_MAN_ON* is active (LOW) and ENABLE_INTERLINK is set to 1 and the ExtendedModes bit is 0, then the path set by the pixel MUX is controlled by the xAFR_MAN bits as described below.

The I2C register reflects the result after the resulting action occurs. It does not directly reflect the clocked in bit.

AFR_AUTO* is sent across the slave TMDS Control Bit bus on bit no 2. It is clocked in with sClk timings and then synced to mClk. It is latched in the clock before mDE goes high after the rising edge of mVSync. The action in response to it then occurs before the first pixel associated with the active mDE hits the MUX and only if AFR_MAN_ON* is low on the same latching point.

When AFR_AUTO* and AFR_MAN_ON* are active and ENABLE_INTERLINK is set to 1 and extended interlink modes are not active, then the path set by the pixel MUX is initially set to the master path. The path is then automatically toggled on every rising edge of mDE after the rising edge of mVSync until AFR_AUTO* is deasserted.

The I2C register reflects the result after the resulting action occurs. It does not directly reflect the clocked in bit.

The mAFR_MAS is set from the master port on mLCTL[1] and sAFR_MAS is set from the slave port on sLCTL[1]. These two bits control which path is set by the pixel MUX when in Interlink mode, manual AFR control.

The mAFR_MAS is clocked directly in with mCLK. The sAFR_MAS is clocked in with sCLK and then synced to mCLK. The bits are latched on the rising clock edge before the rising edge of mDE. Both latched bits then go into a logic block which detects a bit changing state. Depending on an I2C register bit, either after the rising edge of a VSync or an HSync, if a bit is detected as having its state changed, the logic sets the pixel MUX when in AFR_MANUAL Interlink mode to match the path of the toggled bit. The MUX will not change during AFR_MANUAL interlink mode at any other time.

If both bits toggle in the same updating time frame, then the master path is set.

Unlike the other control bits, the I2C register reflects the individual synchronized bits going into the MUX control logic block clocked in with MClk and not the bits after the sync state.

Regarding data and control paths in the IM 1212 of an embodiment, the Dual VPU Interlink Mode works in routing modes that include pass-through, dual/single input AFR Manual interlink, and dual input Blacking Interlink. These routing modes describe which of the data and control lines from the two receivers get transmitted out of the IM 1212 via the transmitter or DAC. **Table 8** shows the data, control, and clock routing by routing mode of the IM 1212, under an embodiment.

The clock is the pixel clock, the internal control lines are the lines that connect between the TMDS transmitter and receivers (and IM 1212), and the external control lines are lines that are not processed by the TMDS circuitry such as I2C and Hot Plug. The Slave pixel hold off signal goes directly between the IM 1212 and the Slave DVI VSync pin.

**Table 8**

| **Routing Mode** | **Clock** | **Internal Control** | **ByPass Control** | **Data** | **Notes** |
|---|---|---|---|---|---|
| Pass-Through | Master or Slave | Master or Slave | Master or Slave | Master or Slave | set by first I2C clock toggling |
| AFR Manual | Master or Slave | Master or Slave | Master or Slave | Master or Slave | set by AFR_MAN control bit |
| Blacking | Master | Master | Master | Master and Slave | Data is interlinked depending on black pixels |

Pass-Through occurs when using the IM 1212 in single-VPU Mode and before the drivers set up the IM 1212 and VPUs for the dual-VPU mode. At power up, the IM 1212 defaults the MUX to pass all data and control lines directly from the master VPU to the output of the IM 1212. As soon as the IM 1212 sees one of the input TMDS I2C clocks toggling, it sets the MUX to pass that specific channel to the output. This includes the clock and all control signals, whether it is from the master or slave VPU. This allows the IM 1212 to connect the default video card of the system directly through to the monitor during power-up BIOS operation, even before the drivers are aware of existence of the IM 1212.

In the Dual VPU Interlink Mode, once the drivers are loaded, the drivers can detect if the IM 1212 exists and if there are one or two connections to the IM 1212. The detection is done by reading the I2C ID register of the IM 1212 through the port of each VPU. The drivers can determine which discovered connection is the master and which is the slave by the value of bit 0 of the IM 1212 ID register read on each port.

If only one connection is found, the IM 1212 is left in Pass-through mode. If two connections are found to the IM 1212, the driver then takes over the screen control, setting the MUX of the IM 1212 to output from the master port, with the VPU connected to the master port as the master VPU. The clock is driven from this port until the power is lost or one of the input connections to the IM 1212 is broken.

The MUX of an embodiment is set by mechanisms that include Pass-Through initial states, AFR Manual Control, and Blacking Control. These modes and the particular controls for each are set through the TMDS CNTR bits, with the IM 1212 responding on the next vertical blanking period. The master/slave switch (AFR_MAS) can latch in/occur on either the next HSync or the next VSync depending on the I2C , control bits setting.

In addition to using TDMS control registers, the drivers also control and monitor the IM functionality using I2C control registers.

I2C registers are used for control and monitoring that does not need to happen every frame or faster. The registers can be available through both the master and slave ports of the IM.

For more dynamic control, the I2C control registers are used to set different multiVPU modes and to manually switch the IM data path.

In one embodiment of a video processing system, inter-integrated circuit communication for the IM is accomplished using an Inter-Integrated Circuit (I2C) bus. I2C is a bus typically used to connect integrated circuits (ICs). I2C is a multi-master bus, which means that multiple ICs can be connected to the same bus and each one can act as a master by initiating a data transfer.

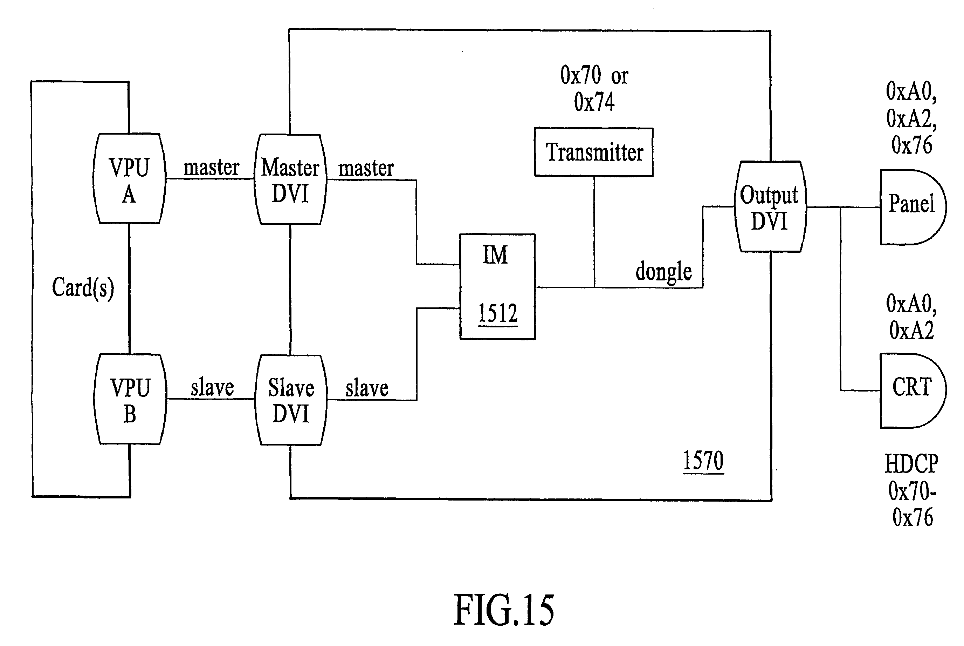

**Figure 15** is diagram of an embodiment of an IM 1512 on a dongle 1570, showing various I2C paths. The dongle 1570 receives data from a master VPU A and a slave VPU B. In an embodiment, the master VPU A and the slave VPU B reside on one or more VPU card(s). In an embodiment, there are three separate I2C buses for the IM 1512. There is an I2C bus from each of two input ports, a master input port and a slave input port. A third I2C bus goes from the IM 1512 to a transmitter, and to any connected output device, such as panel and/or cathode ray tube (CRT).

The two input I2C buses each feed through the DVI master and slave input ports into the dongle 1570 and directly into the IM 1512 on two separate channels.

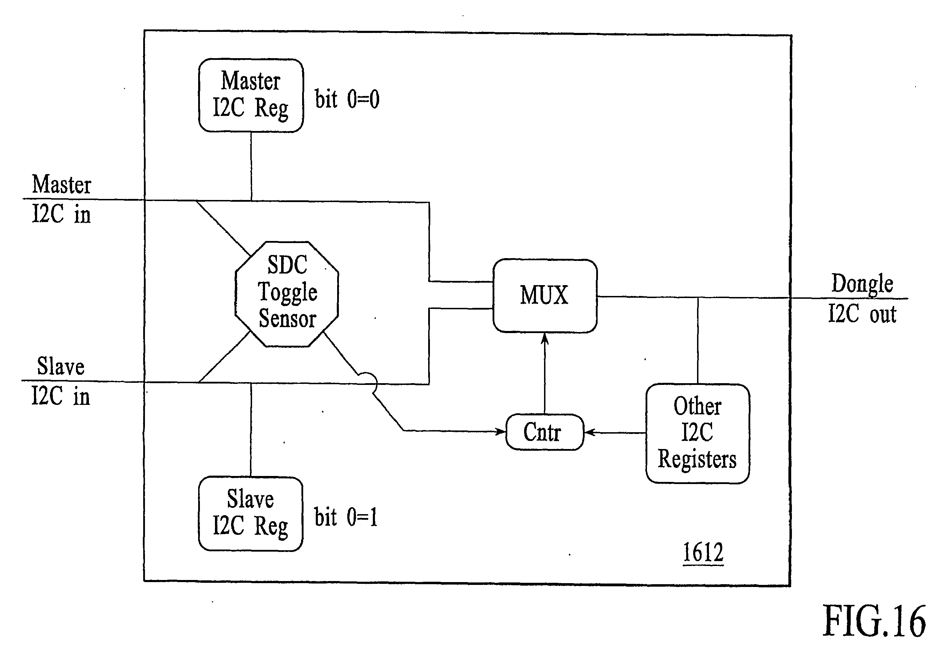

**Figure 16** is a diagram of I2C paths within the IM 1612 according to an embodiment. The IM 1612 includes a master identification (ID) I2C register and a slave ID I2C register. The IM 1612 further includes an SDC toggle sensor, a MUX, and other I2C registers.

Either of VPU A or VPU B can access the ID registers directly through respective input ports without concern for I2C bus ownership.

The IM 1612 has one set of registers which are I2C accessible at a particular I2C device address. All other addresses are passed through the IM 1612 onto the I2C output port.

The master ID register and the slave register each have the same internal address, but are accessible only from their own respective I2C buses (slave or master).

Other than an IM_xxx_ID registers (offset 0) and the I2C_Reset register, the I2C bus is arbitrated on an I2C cycle-by-cycle basis, using a first-come, first-served arbitration scheme.

For read cycles of the multi-byte registers, the ownership is held until the last byte is read. Software drivers insure that all bytes are fully read in the bottom to top sequence. If all bytes are not fully read in the bottom to top sequence, the bus may remain locked and the behavior may become undefined.

For accesses that are passed through the IM 1612 to external devices, the IM 1612 does not understand page addressing or any cycle that requires a dependency on any action in a prior access (cycles that extend for more than one I2C stop bit). Therefore a register bit (CONTROL_BITS_2 : Bit 0 : I2C_LOCK) is added. The software sets this register bit if a multi-I2C access is needed. When this register bit is set, the bus is given to that port specifically until the bit is unset, at which time the automatic arbitration resumes. In a case where both ports try to set this bit, then the standard arbitration method determines which gets access, and a negative acknowledgement (NACK) signal is sent to let the requester know it was unsuccessful.

A specific I2C_Reset register is used in a case of the I2C bus becoming locked for some unexpected reason. Any read to this register, regardless of I2C bus ownership, will always force the I2C state machines to reset and free up the I2C bus ownership, reverting back to the automatic arbitration.

For the other I2C registers, the I2C bus ownership is dynamically arbitrated for on a first-come, first-served fashion. The input port accessing the other registers first with a clock and start bit gets ownership for the duration of the current I2C cycle (that is, until the next stop bit). For multiple-byte read registers (counters) on the IM 1612, the ownership is maintained from the first byte read until the final byte of the register has been read.

If an I2C access starts after the bus has been granted to another input port, then a negative acknowledgement (NACK) signal is sent in response to the access attempt. The data for a read is undefined and writes are discarded.

The IM 1612 supports single non-page type I2C accesses for accesses off of the IM 1612. To allow for locking the I2C bus during multiple dependent type I2C cycles, if an input port sets an I2C LOCK bit (I2C_CONTROL_2 : bit 0) to 1, the I2C bus is held in that port's ownership until the same port sets the same bit back to 0. This register follows the same first-come, first-served arbitration protocol.

If the I2C_RESET register is read from either port (no arbitration or ownership is required), then the I2C state machine is reset and any I2C ownerships are cleared.

**Figure 17** is a diagram of I2C bus paths for a configuration in which a master VPU A and an IM 1712 are on the same VPU card 1752 according to an embodiment. The VPU card 1752 could be part of the system of **Figure 8****,** for example. The VPU card 1752 includes a master VPU 1708, an IM 1712, a DVI transmitter and optional DVI transmitter. There are three I2C buses (master, slave, and interlink), as shown entering and existing the IM 1712. In one embodiment, the interlink I2C bus is a continuation of the master I2C bus or slave I2C bus, depending on which bus is first accessed.

All IM 1712 I2C registers are available to either the slave or master I2C ports. Standard NACK responses are used if the I2C bus is currently in use by the other path. An IM 1712 device ID is an exception and can be accessed by either port at the same time.

In order to optionally verify that an I2C cycle has completed successfully, all write registers are readable back. Since the I2C registers on the IM 1712 do not time out, this matches the current method of I2C accesses used on various conventional video cards. The read back should not be necessary to verify writes.

The IM 1712 I2C resets its state machine (not shown) every time it gets a stop bit. This occurs at the start and end of every I2C cycle, according to known I2C protocol.

A CONTROL_ONESHOTS register (not shown) has a different behavior from the other read/write registers. Once written to, the IM 1712 latches its results to internal control bits. The CONTROL_ONESHOTS registers themselves are cleared on the next read of this register (allowing for confirmation of the write).

The internal copies of the CONTROL_ONESHOTS bits are automatically cleared by the IM 1712 once the IM 1712 has completed the requested function and the CONTROL_ONESHOTS register corresponding bits are cleared. The IM 1712 does not re-latch the internal versions until the I2C versions are manually cleared.

The IM has one set of registers which are I2C accessible. The IM_MASTER_ID and IM_SLAVE_ID registers have the same internal address but are accessible only from their own I2C bus (e.g., slave or master).

The rest of the registers are only accessible from one side (master or slave) at a time.

In order to verify that an I2C cycle has completed successfully, all write registers must also be readable back to verify the updated values. Since the I2C registers on the IM do not time out, this is consistent with conventional methods of I2C accesses used on various existing video cards. If needed, the read back should not be necessary to verify the writes.

The IM I2C also resets its state machine every time it gets a stop bit. This happens as per I2C protocol at the start and end of every I2C cycle.

The CONTROL_ONESHOTS register has a different behavior from the other read/write registers. Once written to, the IM latches its results to internal control bits. The CONTROL_ONESHOTS are cleared on the next read of this register (allowing for confirmation of the write).

The internal copies of the CONTROL_ONESHOTS bits are automatically cleared by the IM once the IM has completed the requested function and the CONTROL_ONESHOTS register corresponding bits are cleared.

In a dongle configuration, such as in Figures 10 and 11, for example, the TMDS control bits are transmitted through the TMDS interface into the IM. The software (driver) sets the registers within the VPU for the desired control bit values and the results arrive at the TMDS receivers on the dongle and are latched into the IM. The AFR_MAN_ON* and AFR_AUTO* are latched on the rising edge of the TMDS VSync. No pixel data is being transmitted at this time. AFR_MAS is latched in on the rising edge of either HSync or VSync, depending on the setting in the I2C Control_Bits register, bit 5.

If the interlink_mode is not enabled (I2C register set), then the bits will be ignored until it is enabled and will take place on the next VSync.

If the interlink_mode is enabled, then the affect occurs on the very next pixel data coming out of the IMs after the VSync or HSync as is appropriate.

If in pass-through modes, the Syncs used are from the active path. If in AFR_MANual or blacking interlink modes, then the Syncs used are always from the master path.

Aspects of the invention described above may be implemented as functionality programmed into any of a variety of circuitry, including but not limited to programmable logic devices (PLDs), such as field programmable gate arrays (FPGAs), programmable array logic (PAL) devices, electrically programmable logic and memory devices and standard cell-based devices, as well as application specific integrated circuits (ASICs) and fully custom integrated circuits. Some other possibilities for implementing aspects of the invention include: microcontrollers with memory (such as electronically erasable programmable read only memory (EEPROM)), embedded microprocessors, firmware, software, etc. Furthermore, aspects of the invention may be embodied in microprocessors having software-based circuit emulation, discrete logic (sequential and combinatorial), custom devices, fuzzy (neural) logic, quantum devices, and hybrids of any of the above device types. Of course the underlying device technologies may be provided in a variety of component types, e.g., metal-oxide semiconductor field-effect transistor (MOSFET) technologies like complementary metal-oxide semiconductor (CMOS), bipolar technologies like emitter-coupled logic (ECL), polymer technologies (e.g., silicon-conjugated polymer and metal-conjugated polymer-metal structures), mixed analog and digital, etc.

Unless the context clearly requires otherwise, throughout the description and the claims, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import, when used in this application, refer to this application as a whole and not to any particular portions of this application. When the word "or" is used in reference to a list of two or more items, that word covers all of the following interpretations of the word: any of the items in the list, all of the items in the list and any combination of the items in the list.

The above description of illustrated embodiments of the invention is not intended to be exhaustive or to limit the invention to the precise form disclosed. While specific embodiments of, and examples for, the invention are described herein for illustrative purposes, various equivalent modifications are possible within the scope of the invention, as those skilled in the relevant art will recognize. The teachings of the invention provided herein can be applied to other systems, not only for the system including graphics processing or video processing as described above.

For example, a video image produced as described herein may be output to a variety of display devices, including computer displays that display moving pictures and printers that print static images.

The various operations described may be performed in a very wide variety of architectures and distributed differently than described. As an example, in a distributed system a server may perform some or all of the rendering process. In addition, though many configurations are described herein, none are intended to be limiting or exclusive. For example, the invention can also be embodied in a system that includes an integrated graphics processor (IGP) or video processor and a discrete graphics or video processor that cooperate to produce a frame to be displayed. In various embodiments, frame data processed by each of the integrated and discrete processors is merged or composited as described. Further, the invention can also be embodied in a system that includes the combination of one or more IGP devices with one or more discrete graphics or video processors.

In other embodiments not shown, the number of VPUs can be more than two.

In other embodiments, some or all of the hardware and software capability described herein may exist in a printer, a camera, television, handheld device, mobile telephone or some other device. The video processing techniques described herein may be applied as part of a process of constructing animation from a video sequence.

The elements and acts of the various embodiments described above can be combined to provide further embodiments. These and other changes can be made to the invention in light of the above detailed description.

All of the U.S. Patent Applications cited herein are hereby incorporated by reference in their entirety.

In general, in the following claims, the terms used should not be construed to limit the video processing method and system to the specific embodiments disclosed in the specification and the claims, but should be construed to include any processing systems that operate under the claims to provide video processing. Accordingly, the video processing method and system is not limited by the disclosure, but instead the scope of the video processing method and system is to be determined entirely by the claims.

While certain aspects of the method and apparatus for video processing are presented below in certain claim forms, the inventors contemplate the various aspects of the method and apparatus for video processing in any number of claim forms. For example, while only one aspect of the method and apparatus for video processing may be recited as embodied in computer-readable medium, other aspects may likewise be embodied in computer-readable medium. Accordingly, the inventors reserve the right to add additional claims after filing the application to pursue such additional claim forms for other aspects of the method and apparatus for video processing.

## Claims

1. A system comprising:
at least one driver configurable to build a set of commands and data that relate to performing a processing task; and
a plurality of processors coupled to receive the set of commands and data, and configurable to share the processing task, wherein the plurality of processors is further configurable to communicate with each other to synchronize the processing task using a communication mechanism determined from the set of commands and data.

2. The system of claim 1, wherein the plurality of processors each comprise:
at least one memory device accessible to the plurality of processors via the communication mechanism;
at least one register accessible to the plurality of processors via the communication mechanism; and
a communication unit comprising a semaphore machine configurable to facilitate the communication mechanism.

3. The system of claim 2, wherein the set of commands and data includes:
at least one semaphore command that causes at least one of the plurality of processors to read a wait semaphore in its at least one memory device and/or in its at least one register; and
at least one semaphore command that causes at least one of the plurality of processors to write a semaphore in the at least one memory device and/or the at least one register of another processor to release a wait semaphore.

4. The system of any one of claims 1 to 3, wherein:
the plurality of processors comprise video processing units (VPUs); and
the shared processing task comprises rendering a video frame.

5. The system of claim 4, wherein the shared processing task comprises at least one synchronization point, comprising:
a VPU to VPU data transfer;
a Swap Lock event; and
rendering the video frame to shared memory.

6. A multi-processor method, comprising:
each of a plurality of processors receiving a set of commands related to a task; and
the plurality of processors sharing performance of the task including synchronization of actions as required to perform the task without errors, wherein synchronization comprises inter-processor communication via a semaphore mechanism as directed by the set of commands.

7. The method of claim 6, further comprising a driver building the set of commands, including inserting semaphore commands and synchronization points.

8. The method of claim 7, wherein the task comprises rendering a video frame, and the synchronization points comprise points in the set of commands where synchronization occurs, the synchronization points comprising:
a VPU to VPU data transfer;
a Swap Lock event; and
rendering the video frame to shared memory.

9. The method of any one of claims 6 to 8, wherein the plurality of processors comprise video processing units (VPUs), and wherein synchronization further comprises a first VPU and a second VPU accessing each other's registers and/or local memories for synchronizing the performance of the task.

10. The method of claim 9, wherein synchronizing performance of the task comprises the first VPU stalling its own execution, including reading a register semaphore in its own registers and/or local memories according to a command in the set of commands.

11. The method of claim 10, wherein synchronizing further comprises the second VPU writing a register semaphore to the registers and/or local memories of the first VPU to release the first VPU from stall according to a command in the set of commands.

12. The method according to any one of claims 6 to 11, wherein synchronization comprises communication among the plurality of processors via a shared memory semaphore mechanism.

13. A computer readable medium having instructions stored thereon which, when implemented in a system, cause the system to perform a multi-processing method in accordance with any one of the claims 6 to 12.

14. A digital image generated by the method of any one of claims 6 to 12.
